(19) Europäisches Patentamt
European Patent Office
Office européen des brevets

(11) **EP 4 697 727 A1**

(12) **EUROPEAN PATENT APPLICATION**
published in accordance with Art. 153(4) EPC

(43) Date of publication:
**18.02.2026 Bulletin 2026/08**

(21) Application number: **24838272.3**

(22) Date of filing: **29.01.2024**

(51) International Patent Classification (IPC):
**H04N 19/91** (2014.01)      **G06N 3/04** (2023.01)

(52) Cooperative Patent Classification (CPC):
**G06N 3/04; G06T 9/00; H04N 19/136;
H04N 19/146; H04N 19/17; H04N 19/42;
H04N 19/85; H04N 19/91**

(86) International application number:
**PCT/CN2024/074438**

(87) International publication number:
**WO 2025/011009 (16.01.2025 Gazette 2025/03)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **11.07.2023   CN 202310852519**

(71) Applicant: **Huawei Technologies Co., Ltd.
Shenzhen, Guangdong 518129 (CN)**

(72) Inventors:
• **MAO, Jue**
  **Shenzhen, Guangdong 518129 (CN)**
• **ZHAO, Yin**
  **Shenzhen, Guangdong 518129 (CN)**
• **ALSHINA, Elena Alexandrovna**
  **Shenzhen, Guangdong 518129 (CN)**
• **SOLOVYEV, Timofey Mikhailovich**
  **Shenzhen, Guangdong 518129 (CN)**
• **JIA, Panqi**
  **Shenzhen, Guangdong 518129 (CN)**

(74) Representative: **Eisenführ Speiser
Patentanwälte Rechtsanwälte PartGmbB
Gollierstraße 4
80339 München (DE)**

(54) **ENCODING METHOD AND DEVICE, AND DECODING METHOD AND DEVICE**

(57)    Embodiments of this application disclose an encoding method and apparatus and a decoding method and apparatus, and relate to the field of media technologies, so that spatial dimension quality adjustment can be performed on image content through JPEG AI. The method includes: obtaining a target quality matrix; scaling a first residual map and/or first Gaussian distribution parameter information based on the target quality matrix to obtain a second residual map and/or second Gaussian distribution parameter information; and generating a bitstream based on the target quality matrix, the second residual map, and/or the second Gaussian distribution parameter information. The target quality matrix represents image quality of each region in a residual map of a feature domain, the first residual map is the residual map of the feature domain, and the first Gaussian distribution parameter information is Gaussian distribution parameter information of the residual map of the feature domain.

FIG. 11

**Description**

This application claims priority to Chinese Patent Application No. 202310852519.1, filed with the China National Intellectual Property Administration on July 11, 2023 and entitled "ENCODING METHOD AND APPARATUS, AND DECODING METHOD AND APPARATUS", which is incorporated herein by reference in its entirety.

**TECHNICAL FIELD**

Embodiments of this application relate to the field of media technologies, and in particular, to an encoding method and apparatus, and a decoding method and apparatus.

**BACKGROUND**

Joint photographic experts group (joint photographic experts group, JPEG) artificial intelligence (artificial intelligence, AI) is a learning-based image coding standard that provides a single-stream and compact compressed-domain representation and significantly improves compression efficiency in comparison with common image coding standards under same subjective quality. The JPEG AI is widely used in various fields. For example, the JPEG AI can be applied to cloud storage, visual surveillance, autonomous vehicles and devices, image capturing, storage, and management, and real-time monitoring and media distribution of visual data.

During actual application of video image coding, different bit rates need to be allocated to a region of interest and a background region for coding, so that a customer requirement is met based on fewer bit rates.

Therefore, how to perform spatial dimension quality adjustment on image content through the JPEG AI is one of problems that need to be urgently resolved by persons skilled in the art.

**SUMMARY**

Embodiments of this application provide an encoding method and apparatus, and a decoding method and apparatus, so that spatial dimension quality adjustment can be performed on image content through JPEG AI. To achieve the foregoing objectives, the following technical solutions are used in embodiments of this application.

According to a first aspect, an embodiment of this application provides an encoding method. The method includes: obtaining a target quality matrix; scaling a first residual map and/or first Gaussian distribution parameter information based on the target quality matrix to obtain a second residual map and/or second Gaussian distribution parameter information; and generating a bitstream based on the target quality matrix, the second residual map, and/or the second Gaussian distribution parameter information. The target quality matrix represents image quality of each region in a residual map of a feature domain, the first residual map is the residual map of the feature domain, and the first Gaussian distribution parameter information is Gaussian distribution parameter information of the residual map of the feature domain.

It can be learned that, according to the method provided in embodiments of this application, the target quality matrix representing the image quality of each region is additionally introduced in a JPEG AI encoding process. Because different locations of the target quality matrix may have different image quality values, the target quality matrix is used for encoding to implement bit rate allocation for different regions in image space, so that spatial dimension quality adjustment can be performed on image content through JPEG AI.

In a possible implementation, a target quality scaling matrix may be determined based on the target quality matrix. The target quality scaling matrix represents a scaling value of each region in the residual map of the feature domain and/or the Gaussian distribution parameter information. A target quality scaling tensor is determined based on the target quality scaling matrix. The target quality scaling tensor represents a scaling tensor of the residual map of the feature domain and/or the Gaussian distribution parameter information in three-dimensional space. The first residual map is scaled based on the target quality scaling tensor to obtain the second residual map, and/or the first Gaussian distribution parameter information is scaled based on the target quality scaling tensor to obtain the second Gaussian distribution parameter information.

It can be learned that, according to the method provided in embodiments of this application, the target quality matrix representing the image quality of each region is additionally introduced in the JPEG AI encoding process, and the target quality scaling tensor is determined based on the target quality matrix. Because different locations of the target quality matrix may have different image quality values, the target quality scaling tensor is used for encoding to implement bit rate allocation for different regions in the image space, so that spatial dimension quality adjustment can be performed on the image content through the JPEG AI.

In a possible implementation, the target quality scaling tensor may be determined based on the target quality scaling matrix and a gain parameter. The gain parameter includes a channel-level quality adjustment gain vector and/or an image-level quality control factor.

It can be learned that, according to the method provided in embodiments of this application, the target quality matrix representing the image quality of each region is additionally introduced in the JPEG AI encoding process, target quality scaling is determined based on the target quality matrix, and the target quality scaling tensor is determined based on the target quality scaling matrix and the gain parameter. Because different locations of the target quality matrix may have different image quality values, the target quality scaling tensor is used for encoding to implement bit rate allocation for different regions in the image space, so that spatial dimension quality adjustment can be performed on the image content through the JPEG AI.

In a possible implementation, the target quality matrix and the second residual map may be encoded to generate the bitstream. The second residual map is encoded based on the second Gaussian distribution parameter information.

It can be learned that, according to the method provided in embodiments of this application, the target quality matrix and the second residual map may be encoded to generate the bitstream. Because different locations of the target quality matrix may have different image quality values, the target quality scaling tensor is used for encoding to implement bit rate allocation for different regions in the image space, so that spatial dimension quality adjustment can be performed on the image content through the JPEG AI.

In a possible implementation, the target quality matrix or a target quality residual matrix of the target quality matrix may be encoded to generate the bitstream.

It can be learned that, according to the method provided in embodiments of this application, the target quality matrix or the target quality residual matrix of the target quality matrix may be encoded to generate the bitstream. Because different locations of the target quality matrix may have different image quality values, the target quality scaling tensor is used for encoding to implement bit rate allocation for different regions in the image space, so that spatial dimension quality adjustment can be performed on the image content through the JPEG AI.

In a possible implementation, the target quality residual matrix of the target quality matrix may be generated based on the target quality matrix. The target quality residual matrix represents a residual value of each piece of image quality of the target quality matrix.

It may be understood that the residual value is smaller than a data amount of a quality value. Therefore, the target quality residual matrix of the target quality matrix is generated based on the target quality matrix, and encoding is performed based on the target quality residual matrix, so that complexity of generating the bitstream can be reduced.

In a possible implementation, a Gaussian distribution parameter of the target quality residual matrix may be determined; a probability distribution of the target quality residual matrix is determined based on the Gaussian distribution parameter; the Gaussian distribution parameter is written into the bitstream; and entropy encoding is performed on the target quality residual matrix based on the probability distribution.

It can be learned that, in embodiments of this application, the target quality residual matrix may be analyzed to obtain the Gaussian distribution parameter of the target quality residual matrix, and the probability distribution of the target quality residual matrix is determined based on the Gaussian distribution parameter, so that the target quality residual matrix is encoded into the bitstream based on the probability distribution of the target quality residual matrix. The target quality matrix may be determined based on the target quality residual matrix. Because different locations of the target quality matrix may have different image quality values, the target quality scaling tensor is used for encoding to implement bit rate allocation for different regions in the image space, so that spatial dimension quality adjustment can be performed on the image content through the JPEG AI.

In a possible implementation, a Gaussian distribution parameter of the target quality matrix may be determined. A probability distribution of the target quality matrix is determined based on the Gaussian distribution parameter. The Gaussian distribution parameter is written into the bitstream. Entropy encoding is performed on the target quality matrix based on the probability distribution.

It can be learned that, in embodiments of this application, the target quality matrix may be analyzed to obtain the Gaussian distribution parameter of the target quality matrix, and the probability distribution of the target quality matrix is determined based on the Gaussian distribution parameter, so that the target quality residual matrix is encoded into the bitstream based on the probability distribution of the target quality matrix. Because different locations of the target quality matrix may have different image quality values, the target quality scaling tensor is used for encoding to implement bit rate allocation for different regions in the image space, so that spatial dimension quality adjustment can be performed on the image content through the JPEG AI.

In a possible implementation, a target probability distribution may be determined from a plurality of candidate probability distributions based on the target quality residual matrix; an index number of the target probability distribution is written into the bitstream; and entropy encoding is performed on the target quality residual matrix based on the target probability distribution.

It can be learned that, in embodiments of this application, the target quality residual matrix may be analyzed to obtain the target probability distribution that is determined from the plurality of candidate probability distributions and that matches the target quality residual matrix, so that the target quality residual matrix is encoded into the bitstream based on the target probability distribution. The target quality matrix may be determined based on the target quality residual matrix. Because different locations of the target quality matrix may have different image quality values, the target quality scaling tensor is used for encoding to implement bit rate allocation for different regions in the image space, so that spatial dimension quality adjustment can be performed on the image content through the JPEG AI.

In a possible implementation, a target probability distribution may be determined from a plurality of candidate probability distributions based on the target quality matrix. An index number of the target probability distribution is written into the bitstream. Entropy encoding is performed on the target quality matrix based on the target probability distribution.

It can be learned that, in embodiments of this application, the target quality matrix may be analyzed to obtain the target probability distribution that is determined from the plurality of candidate probability distributions and that matches the target quality matrix, so that the target quality matrix is encoded into the bitstream based on the target probability distribution. Because different locations of the target quality matrix may have different image quality values, the target quality scaling tensor is used for encoding to implement bit rate allocation for different regions in the image space, so that spatial dimension quality adjustment can be performed on the image content through the JPEG AI.

In a possible implementation, a quality map may be obtained, where the quality map is used to record the image quality of each region in the residual map of the feature domain. The target quality matrix is determined based on the quality map.

It can be learned that, according to the method provided in embodiments of this application, the target quality matrix may be determined based on the quality map. Because different locations of the target quality matrix may have different image quality values, the target quality scaling tensor is used for encoding to implement bit rate allocation for different regions in the image space, so that spatial dimension quality adjustment can be performed on the image content through the JPEG AI.

In a possible implementation, the image is input into an encoder network to obtain a first feature map. The first feature map is input into a context network to obtain a first prediction map. The first residual map is determined based on the first feature map and the first prediction map. The first feature map is input into a hyper encoder network to obtain first hyperprior information. The first hyperprior information is quantized to obtain second hyperprior information. The second hyperprior information is input into a hyper scale decoder network to obtain the first Gaussian distribution parameter information.

It can be learned that, according to the method provided in embodiments of this application, the first Gaussian distribution parameter information may be obtained based on the input image, and after the first Gaussian distribution parameter information is obtained, the first Gaussian distribution parameter information may be scaled based on the target quality matrix. Because different locations of the target quality matrix may have different image quality values, the target quality scaling tensor is used for encoding to implement bit rate allocation for different regions in the image space, so that spatial dimension quality adjustment can be performed on the image content through the JPEG AI.

According to a second aspect, an embodiment of this application further provides a decoding method. The method includes: obtaining a bitstream; determining a target quality matrix based on the bitstream, where the target quality matrix represents image quality of each region in a residual map of a feature domain; scaling third Gaussian distribution parameter information based on the target quality matrix to obtain fourth Gaussian distribution parameter information, where the third Gaussian distribution parameter information is Gaussian distribution parameter information of the residual map of the feature domain; decoding the bitstream based on the fourth Gaussian distribution parameter information to obtain a third residual map, where the third residual map is the residual map of the feature domain; dequantizing the third residual map based on the target quality matrix to obtain a fourth residual map; and determining a reconstructed image based on the fourth residual map.

In a possible implementation, a target quality scaling matrix may be determined based on the target quality matrix. The target quality scaling matrix represents a scaling value of each region in the residual map of the feature domain and the Gaussian distribution parameter information. A target quality scaling tensor is determined based on the target quality scaling matrix. The target quality scaling tensor represents scaling tensors of the residual map of the feature domain and the Gaussian distribution parameter information in three-dimensional space. The third Gaussian distribution parameter information is scaled based on the target quality scaling tensor to obtain the fourth Gaussian distribution parameter information.

In a possible implementation, the target quality scaling tensor may be determined based on the target quality scaling matrix and a gain parameter. The gain parameter includes a channel-level quality adjustment gain vector and/or an image-level quality control factor.

In a possible implementation, the bitstream may be decoded to obtain a Gaussian distribution parameter of a target quality residual matrix of the target quality matrix. A probability distribution of the target quality residual matrix is determined based on the Gaussian distribution parameter. The bitstream is decoded based on the probability distribution to obtain the target quality residual matrix. The target quality matrix is determined based on the target quality residual matrix.

In a possible implementation, the bitstream may be decoded to obtain a Gaussian distribution parameter of the target quality matrix. A probability distribution of the target quality matrix is determined based on the Gaussian distribution parameter. The bitstream is decoded based on the probability distribution to obtain the target quality matrix.

In a possible implementation, the bitstream may be decoded to obtain an index number of a target probability distribution. The target probability distribution is determined from a plurality of candidate probability distributions based on a target quality residual matrix of the target quality matrix. The bitstream is decoded based on the target probability distribution to obtain the target quality residual matrix. The target quality matrix is determined based on the target quality residual matrix.

In a possible implementation, the bitstream may be decoded to obtain an index number of a target probability distribution. The target probability distribution is determined from a plurality of candidate probability distributions based on the target quality matrix. The bitstream is decoded based on the target probability distribution to obtain the target quality matrix.

In a possible implementation, the bitstream is decoded to obtain a second feature map. The second feature map is input into a hyper scale decoder network to obtain the third Gaussian distribution parameter information.

According to a third aspect, an embodiment of this application further provides a decoding method. The method includes: obtaining a bitstream; determining a target quality matrix based on the bitstream, where the target quality matrix represents image quality of each region in a residual map of a feature domain; scaling third Gaussian distribution parameter information based on the target quality matrix to obtain fourth Gaussian distribution parameter information, where the third Gaussian distribution parameter information is Gaussian distribution parameter information of the residual map of the feature domain; decoding the bitstream based on the fourth Gaussian distribution parameter information to obtain a third residual map, where the third residual map is the residual map of the feature domain; and determining a reconstructed image based on the third residual map.

According to a fourth aspect, an embodiment of this application further provides a decoding method. The method includes: obtaining a bitstream; determining a target quality matrix based on the bitstream, where the target quality matrix represents image quality of each region in a residual map of a feature domain; decoding the bitstream based on third Gaussian distribution parameter information to obtain a third residual map, where the third Gaussian distribution parameter information is Gaussian distribution parameter information of the residual map of the feature domain, and the third residual map is the residual map of the feature domain; dequantizing the third residual map based on the target quality matrix to obtain a fourth residual map; and determining a reconstructed image based on the fourth residual map.

According to a fifth aspect, an embodiment of this application further provides an encoding apparatus. The apparatus includes a transceiver unit and a processing unit. The transceiver unit is configured to obtain a target quality matrix. The target quality matrix represents image quality of each region in a residual map of a feature domain. The processing unit is configured to scale a first residual map and/or first Gaussian distribution parameter information based on the target quality matrix to obtain a second residual map and/or second Gaussian distribution parameter information. The first residual map is the residual map of the feature domain, and the first Gaussian distribution parameter information is Gaussian distribution parameter information of the residual map of the feature domain. The processing unit is further configured to generate a bitstream based on the target quality matrix, the second residual map, and/or the second Gaussian distribution parameter information.

In a possible implementation, the processing unit is specifically configured to: determine a target quality scaling matrix based on the target quality matrix, where the target quality scaling matrix represents a scaling value of each region in the residual map of the feature domain and/or the Gaussian distribution parameter information; determine a target quality scaling tensor based on the target quality scaling matrix, where the target quality scaling tensor represents a scaling tensor of the residual map of the feature domain and/or the Gaussian distribution parameter information in three-dimensional space; and scale the first residual map based on the target quality scaling tensor to obtain the second residual map, and/or scale the first Gaussian distribution parameter information based on the target quality scaling tensor to obtain the second Gaussian distribution parameter information.

In a possible implementation, the processing unit is specifically configured to determine the target quality scaling tensor based on the target quality scaling matrix and a gain parameter. The gain parameter includes a channel-level quality adjustment gain vector and/or an image-level quality control factor.

In a possible implementation, the processing unit is specifically configured to encode the target quality matrix and the second residual map to generate the bitstream. The second residual map is encoded based on the second Gaussian distribution parameter information.

In a possible implementation, the processing unit is specifically configured to encode the target quality matrix or a target quality residual matrix of the target quality matrix to generate the bitstream.

In a possible implementation, the processing unit is further configured to generate the target quality residual matrix of the target quality matrix based on the target quality matrix. The target quality residual matrix represents a residual value of each piece of image quality of the target quality matrix.

In a possible implementation, the processing unit is specifically configured to: determine a Gaussian distribution parameter of the target quality residual matrix; determine a probability distribution of the target quality residual matrix based on the Gaussian distribution parameter; write the Gaussian distribution parameter into the bitstream; and perform entropy encoding on the target quality residual matrix based on the probability distribution.

In a possible implementation, the processing unit is specifically configured to: determine a Gaussian distribution parameter of the target quality matrix; determine a probability distribution of the target quality matrix based on the Gaussian distribution parameter; write the Gaussian distribution parameter into the bitstream; and perform entropy encoding on the target quality matrix based on the probability distribution.

In a possible implementation, the processing unit is specifically configured to: determine a target probability distribution from a plurality of candidate probability distributions based on the target quality residual matrix; write an index number of the target probability distribution into the bitstream; and perform entropy encoding on the target quality residual matrix based on the target probability distribution.

In a possible implementation, the processing unit is specifically configured to: determine a target probability distribution from a plurality of candidate probability distributions based on the target quality matrix; write an index number of the target probability distribution into the bitstream; and perform entropy encoding on the target quality matrix based on the target probability distribution.

In a possible implementation, the obtaining unit is specifically configured to: obtain a quality map, where the quality map is used to record the image quality of each region in the residual map of the feature domain; and determine the target quality matrix based on the quality map.

In a possible implementation, the processing unit is further configured to: input the image into an encoder network to obtain a first feature map; input the first feature map into a context network to obtain a first prediction map; determine the first residual map based on the first feature map and the first prediction map; input the first feature map into a hyper encoder network to obtain first hyperprior information; quantize the first hyperprior information to obtain second hyperprior information; and input the second hyperprior information into a hyper scale decoder network to obtain the first Gaussian distribution parameter information.

According to a sixth aspect, an embodiment of this application further provides a decoding apparatus. The apparatus includes a transceiver unit and a processing unit. The transceiver unit is configured to obtain a bitstream. The processing unit is configured to determine a target quality matrix based on the bitstream. The target quality matrix represents image quality of each region in a residual map of a feature domain. The processing unit is further configured to scale third Gaussian distribution parameter information based on the target quality matrix to obtain fourth Gaussian distribution parameter information. The third Gaussian distribution parameter information is Gaussian distribution parameter information of the residual map of the feature domain. The processing unit is further configured to decode the bitstream based on the fourth Gaussian distribution parameter information to obtain a third residual map. The third residual map is the residual map of the feature domain. The processing unit is further configured to dequantize the third residual map based on the target quality matrix to obtain a fourth residual map. The processing unit is further configured to determine a reconstructed image based on the fourth residual map.

In a possible implementation, the processing unit is specifically configured to: determine a target quality scaling matrix based on the target quality matrix, where the target quality scaling matrix represents a scaling value of each region in the residual map of the feature domain and the Gaussian distribution parameter information; determine a target quality scaling tensor based on the target quality scaling matrix, where the target quality scaling tensor represents scaling tensors of the residual map of the feature domain and the Gaussian distribution parameter information in three-dimensional space; and scale the third Gaussian distribution parameter information based on the target quality scaling tensor to obtain the fourth Gaussian distribution parameter information.

In a possible implementation, the processing unit is specifically configured to determine the target quality scaling tensor based on the target quality scaling matrix and a gain parameter. The gain parameter includes a channel-level quality adjustment gain vector and/or an image-level quality control factor.

In a possible implementation, the processing unit is specifically configured to: decode the bitstream to obtain a Gaussian distribution parameter of a target quality residual matrix of the target quality matrix; determine a probability distribution of the target quality residual matrix based on the Gaussian distribution parameter; decode the bitstream based on the probability distribution to obtain the target quality residual matrix; and determine the target quality matrix based on the target quality residual matrix.

In a possible implementation, the processing unit is specifically configured to: decode the bitstream to obtain a Gaussian distribution parameter of the target quality matrix; determine a probability distribution of the target quality matrix based on the Gaussian distribution parameter; and decode the bitstream based on the probability distribution to obtain the target quality matrix.

In a possible implementation, the processing unit is specifically configured to: decode the bitstream to obtain an index number of a target probability distribution, where the target probability distribution is determined from a plurality of candidate probability distributions based on a target quality residual matrix of the target quality matrix; decode the bitstream based on the target probability distribution to obtain the target quality residual matrix; and determine the target quality matrix based on the target quality residual matrix.

In a possible implementation, the processing unit is specifically configured to: decode the bitstream to obtain an index number of a target probability distribution, where the target probability distribution is determined from a plurality of candidate probability distributions based on the target quality matrix; and decode the bitstream based on the target probability distribution to obtain the target quality matrix.

In a possible implementation, the processing unit is further configured to: decode the bitstream to obtain a second feature map; and input the second feature map into a hyper scale decoder network to obtain the third Gaussian distribution parameter information.

According to a seventh aspect, an embodiment of this application further provides a decoding apparatus. The apparatus includes a transceiver unit and a processing unit. The transceiver unit is configured to obtain a bitstream. The processing unit is configured to determine a target quality matrix based on the bitstream. The target quality matrix represents image quality of each region in a residual map of a feature domain. The processing unit is further configured to scale third Gaussian distribution parameter information based on the target quality matrix to obtain fourth Gaussian distribution parameter information. The third Gaussian distribution parameter information is Gaussian distribution parameter information of the residual map of the feature domain. The processing unit is further configured to decode the bitstream based on the fourth Gaussian distribution parameter information to obtain a third residual map. The third residual map is the residual map of the feature domain. The processing unit is further configured to determine a reconstructed image based on the third residual map.

According to an eighth aspect, an embodiment of this application further provides a decoding apparatus. The apparatus includes a transceiver unit and a processing unit. The transceiver unit is configured to obtain a bitstream. The processing unit is configured to determine a target quality matrix based on the bitstream. The target quality matrix represents image quality of each region in a residual map of a feature domain. The processing unit is further configured to decode the bitstream based on third Gaussian distribution parameter information to obtain a third residual map. The third Gaussian distribution parameter information is Gaussian distribution parameter information of the residual map of the feature domain, and the third residual map is the residual map of the feature domain. The processing unit is further configured to dequantize the third residual map based on the target quality matrix to obtain a fourth residual map. The processing unit is further configured to determine a reconstructed image based on the fourth residual map.

According to a ninth aspect, an embodiment of this application further provides a bitstream. The bitstream includes a target quality matrix, a third residual map, and a third Gaussian distribution parameter. The target quality matrix represents image quality of each region in a residual map of a feature domain, the third residual map is the residual map of the feature domain, and the third Gaussian distribution parameter information is Gaussian distribution parameter information of the residual map of the feature domain. The target quality matrix is used to scale the third Gaussian distribution parameter information to obtain fourth Gaussian distribution parameter information. The target quality matrix is further used to dequantize the third residual map to obtain a fourth residual map.

According to a tenth aspect, an embodiment of this application further provides an encoding apparatus. The apparatus includes at least one processor. When the at least one processor executes program code or instructions, the method according to any one of the first aspect or the possible implementations of the first aspect is implemented.

Optionally, the apparatus may further include at least one memory, and the at least one memory is configured to store the program code or the instructions.

According to an eleventh aspect, an embodiment of this application further provides a decoding apparatus. The apparatus includes at least one processor. When the at least one processor executes program code or instructions, the method according to any one of the second aspect or the possible implementations of the second aspect is implemented.

Optionally, the apparatus may further include at least one memory, and the at least one memory is configured to store the program code or the instructions.

According to a twelfth aspect, an embodiment of this application further provides a chip, including an input interface, an output interface, and at least one processor. Optionally, the chip further includes a memory. The at least one processor is configured to execute code in the memory. When the at least one processor executes the code, the chip implements the method according to any one of the first aspect or the possible implementations of the first aspect.

Optionally, the chip may be an integrated circuit.

According to a thirteenth aspect, an embodiment of this application further provides a computer-readable storage medium, configured to store a computer program. The computer program is used to implement the method according to any one of the first aspect or the possible implementations of the first aspect.

According to a fourteenth aspect, an embodiment of this application further provides a computer program product including instructions. When the computer program product runs on a computer, the computer is enabled to implement the method according to any one of the first aspect or the possible implementations of the first aspect.

According to a fifteenth aspect, an embodiment of this application further provides a computer-readable storage medium. The computer-readable storage medium stores a video bitstream obtained by one or more processors by performing the method according to any one of the first aspect or the possible implementations of the first aspect.

The encoding apparatus, the decoding apparatus, the computer storage medium, the computer program product, and the chip provided in embodiments are all configured to perform the encoding method and the decoding method provided above. Therefore, for beneficial effect that can be achieved by the encoding apparatus, the decoding apparatus, the computer storage medium, the computer program product, and the chip, refer to the beneficial effect of the encoding method and the decoding method provided above. Details are not described herein again.

**BRIEF DESCRIPTION OF DRAWINGS**

To describe technical solutions in embodiments of this application more clearly, the following briefly describes accompanying drawings for describing embodiments. It is clear that the accompanying drawings in the following descriptions show merely some of embodiments of this application, and persons of ordinary skill in the art may still derive other accompanying drawings from these accompanying drawings without creative efforts.

FIG. 1a is an example block diagram of a coding system according to an embodiment of this application;

FIG. 1b is an example block diagram of a video coding system according to an embodiment of this application;

FIG. 2 is an example block diagram of a video encoder according to an embodiment of this application;

FIG. 3 is an example block diagram of a video decoder according to an embodiment of this application;

FIG. 4 is an example block diagram of a video coding device according to an embodiment of this application;

FIG. 5 is an example block diagram of an apparatus according to an embodiment of this application;

FIG. 6 is a diagram of a neural network-based image compression method according to an embodiment of this application;

FIG. 7 is a diagram of an end-to-end image encoding framework according to an embodiment of this application;

FIG. 8 is a diagram of a structure of a neural network according to an embodiment of this application;

FIG. 9 is an example block diagram of an encoder/decoder network according to an embodiment of this application;

FIG. 10 is another example block diagram of an encoder/decoder network according to an embodiment of this application;

FIG. 11 is a diagram of an encoding method according to an embodiment of this application;

FIG. 12 is a schematic flowchart of generating a target quality scaling tensor according to an embodiment of this application;

FIG. 13 shows an encoder side architecture according to an embodiment of this application;

FIG. 14 is a diagram of a decoding method according to an embodiment of this application;

FIG. 15 is a diagram of another decoding method according to an embodiment of this application;

FIG. 16 is a diagram of still another decoding method according to an embodiment of this application;

FIG. 17 shows a decoder side architecture according to an embodiment of this application;

FIG. 18 is a diagram of an encoding apparatus according to an embodiment of this application;

FIG. 19 is a diagram of a decoding apparatus according to an embodiment of this application;

FIG. 20 is a diagram of another decoding apparatus according to an embodiment of this application;

FIG. 21 is a diagram of still another decoding apparatus according to an embodiment of this application;

FIG. 22 is a diagram of a structure of a chip according to an embodiment of this application;

FIG. 23 is a diagram of a structure of another neural network according to an embodiment of this application;

FIG. 24 is a diagram of a structure of a video coding for machine system according to an embodiment of this application; and

FIG. 25 is a diagram of a structure of a bitstream according to an embodiment of this application.

## DESCRIPTION OF EMBODIMENTS

The following clearly and completely describes technical solutions of embodiments of this application with reference to accompanying drawings in embodiments of this application. It is clear that the described embodiments are merely some but not all of embodiments of this application. All other embodiments obtained by persons of ordinary skill in the art based on embodiments of this application without creative efforts shall fall within the protection scope of embodiments of this application.

The term "and/or" in this specification describes only an association relationship for describing associated objects and represents that three relationships may exist. For example, A and/or B may represent the following three cases: Only A exists, both A and B exist, and only B exists.

In this specification and the accompanying drawings of embodiments of this application, the terms "first", "second", and the like are intended to distinguish between different objects or distinguish between different processing of a same object, but do not indicate a particular order of the objects.

In addition, the terms "including", "having", and any other variants thereof mentioned in descriptions of embodiments of this application are intended to cover a non-exclusive inclusion. For example, a process, a method, a system, a product, or a device that includes a series of steps or units is not limited to the listed steps or units, but optionally further includes another unlisted step or unit, or optionally further includes another inherent step or unit of the process, the method, the product, or the device.

It should be noted that, in descriptions of embodiments of this application, terms such as "example" or "for example" are used to represent giving an example, an illustration, or a description. Any embodiment or design solution described by using "example" or "for example" in embodiments of this application should not be explained as being more preferred or having more advantages than another embodiment or design solution. Exactly, the word "example", "for example", or the like is used to present a related concept in a specific manner.

In the description of embodiments of this application, "a plurality of" means two or more than two unless otherwise specified.

First, the terms in embodiments of this application are explained.

Data coding includes two parts: data encoding and data decoding. Data encoding is performed at a source side (or usually referred to as an encoder side), and usually includes processing (for example, compressing) raw data to reduce an amount of data required for representing the raw data (for more efficient storage and/or transmission). Data decoding is performed at a destination side (or usually referred to as a decoder side), and usually includes inverse processing relative to the encoder side to reconstruct the raw data. "Coding" of data in embodiments of this application should be understood as "encoding" or "decoding" of the data. A combination of an encoding part and a decoding part is also referred to as encoding and decoding (encoding and decoding, CODEC).

In a case of lossless data coding, the raw data can be reconstructed. In other words, reconstructed raw data has same quality as the raw data (it is assumed that no transmission loss or other data loss occurs during storage or transmission). In a case of lossy data coding, further compression is performed through, for example, quantization, to reduce an amount of data required for representing the raw data, and the raw data cannot be fully reconstructed at the decoder side. In other words, quality of reconstructed raw data is lower or worse than quality of the raw data.

Embodiments of this application may be applied to video data, other data having a compression/decompression requirement, and the like. The following describes embodiments of this application by using coding of the video data (which is briefly referred to as video coding) as an example. For other types of data (for example, image data, audio data, integer data, and other data having a compression/decompression requirement), refer to the following descriptions. Details are not described in embodiments of this application. It should be noted that, compared with video coding, in a process of coding data such as the audio data and the integer data, the data does not need to be partitioned into blocks, but the data may be directly coded.

Video coding usually refers to processing of a sequence of images, where the sequence of images forms a video or a video sequence. In the field of video coding, the terms "picture (picture)", "frame (frame)", and "image (image)" may be used as synonyms.

Several video coding standards are used for "lossy hybrid video encoding and decoding" (that is, spatial and temporal prediction in pixel domain is combined with 2D transform coding for applying quantization in transform domain). Each image of a video sequence is usually partitioned into a set of non-overlapping blocks, and coding is usually performed at a block level. To be specific, an encoder usually processes, that is, encodes, a video at a block (video block) level. For example, a prediction block is generated through spatial (intra) prediction and temporal (inter) prediction; the prediction block is subtracted from a current block (a block being processed/to be processed) to obtain a residual block; and the residual block is transformed in transform domain and quantized to reduce an amount of data to be transmitted (compressed). At the decoder side, an inverse processing part relative to the encoder is performed on an encoded block or a compressed block to reconstruct the current block for representation. Further, the encoder needs to repeat the processing step of the decoder, so that the encoder and the decoder generate same prediction (for example, intra prediction and inter prediction) and/or a same reconstruction pixel, for processing, that is, for encoding a subsequent block.

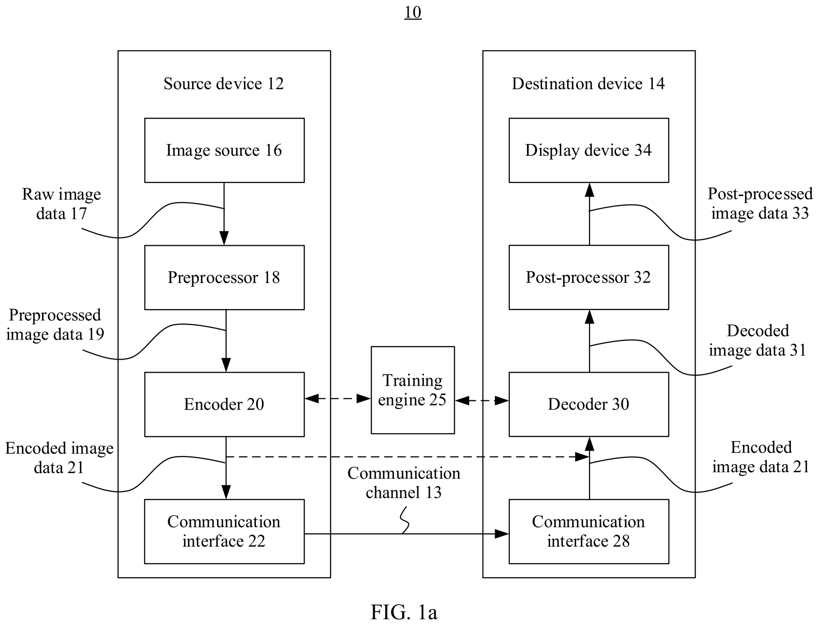

In the following embodiments of a coding system 10, an encoder 20 and a decoder 30 are described based on FIG. 1a to FIG. 3.

FIG. 1a is an example block diagram of a coding system 10 according to an embodiment of this application, for example, a video coding system 10 (also referred to as a coding system 10 for short) that may use technologies in embodiments of this application. A video encoder 20 (also referred to as an encoder 20 for short) and a video decoder 30 (also referred to as a decoder 30 for short) of the video coding system 10 represent devices that may be configured to perform technologies according to various examples described in embodiments of this application.

As shown in FIG. la, the coding system 10 includes a source device 12. The source device 12 is configured to provide encoded image data 21 such as an encoded image to a destination device 14 for decoding the encoded image data 21.

The source device 12 includes the encoder 20, and may additionally, that is, optionally, include an image source 16, a preprocessor (or preprocessing unit) 18, for example, an image preprocessor, and a communication interface (or communication unit) 22.

The image source 16 may include or be any type of image capturing device for capturing a real-world image and the like, and/or any type of image generating device, for example a computer graphics processing unit for generating a computer animated image, or any type of device for obtaining and/or providing a real-world image, a computer generated image (for example, screen content, a virtual reality (virtual reality, VR) image) and/or any combination thereof (for example, an augmented reality (augmented reality, AR) image). The image source may be any type of memory or storage for storing any one of the foregoing images.

To distinguish between processing performed by the preprocessor (or preprocessing unit) 18, an image (or image data) 17 may also be referred to as a raw image (or raw image data) 17.

The preprocessor 18 is configured to: receive the raw image data 17, and perform preprocessing on the raw image data 17 to obtain a preprocessed image (or preprocessed image data) 19. For example, preprocessing performed by the preprocessor 18 may include trimming, color format conversion (for example, from RGB to YCbCr), color correction, or denoising. It may be understood that the preprocessing unit 18 may be an optional component.

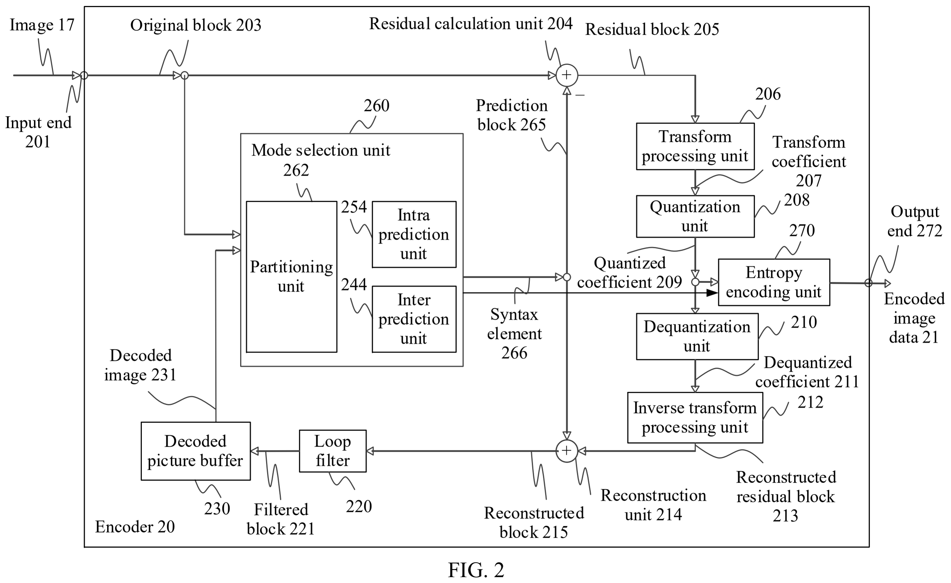

The video encoder (or encoder) 20 is configured to: receive the preprocessed image data 19, and provide the encoded image data 21 (further details are described below, for example, based on FIG. 2).

A communication interface 22 of the source device 12 may be configured to: receive the encoded image data 21, and send the encoded image data 21 (or any further processed version thereof) through a communication channel 13 to another device such as the destination device 14 or any other device for storage or direct reconstruction.

The destination device 14 includes the decoder 30, and may additionally or optionally include a communication interface (or communication unit) 28, a post-processor (or post-processing unit) 32, and a display device 34.

The communication interface 28 of the destination device 14 is configured to: receive the encoded image data 21 (or any further processed version thereof) directly from the source device 12 or from any other source device such as a storage device, for example, an encoded image data storage device, and provide the encoded image data 21 for the decoder 30.

The communication interface 22 and the communication interface 28 may be configured to transmit or receive the encoded image data (or encoded data) 21 via a direct communication link between the source device 12 and the destination device 14, for example, a direct wired or wireless connection, or via any type of network, for example, a wired or wireless network or any combination thereof, or any type of private and public network, or any type of combination thereof.

The communication interface 22 may be, for example, configured to: package the encoded image data 21 into an appropriate format, for example, a packet, and/or process the encoded image data through any type of transmission encoding or processing for transmission via a communication link or communication network.

The communication interface 28 corresponds to the communication interface 22, and for example, may be configured to: receive transmission data, and process the transmission data through any type of corresponding transmission decoding or processing and/or decapsulation, to obtain the encoded image data 21.

Both the communication interface 22 and the communication interface 28 may be configured as unidirectional communication interfaces as indicated by an arrow for the corresponding communication channel 13 that points from the source device 12 to the destination device 14 as shown in FIG. 1a, or bidirectional communication interfaces, and may be configured to send and receive messages, to establish a connection, and acknowledge and exchange any other information related to the communication link and/or data transmission, for example, encoded image data transmission.

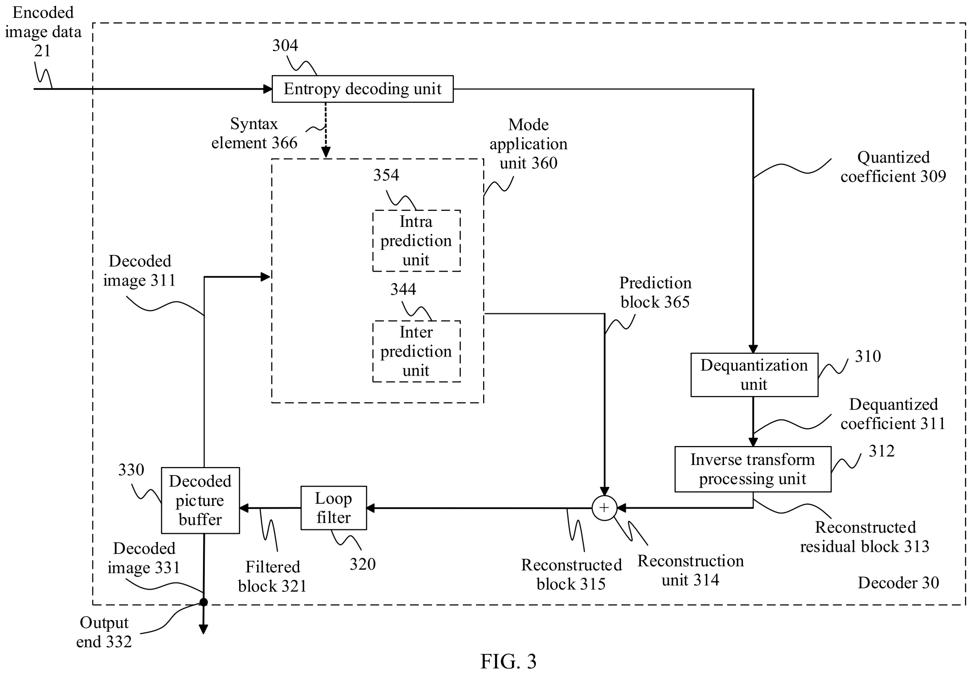

The video decoder (or decoder) 30 is configured to: receive the encoded image data 21, and provide decoded image data (or decoded image data) 31 (further details are described below, for example, based on FIG. 3).

The post-processor 32 is configured to perform post-processing on the decoded image data 31 (also referred to as reconstructed image data) such as a decoded image, to obtain post-processed image data 33 such as a post-processed image. Post-processing performed by the post-processing unit 32 may include, for example, color format conversion (for example, conversion from YCbCr to RGB), color correction, trimming, resampling, or any other processing for generating the decoded image data 31 for display by, for example, the display device 34.

The display device 34 is configured to receive the post-processed image data 33, to display an image to a user, a viewer, or the like. The display device 34 may be or may include any type of display, for example, an integrated or external display screen or display, configured to display a reconstructed image. For example, the display may include a liquid crystal display (liquid crystal display, LCD), an organic light-emitting diode (organic light emitting diode, OLED) display, a plasma display, a projector, a micro LED display, a liquid crystal on silicon (liquid crystal on silicon, LCoS) display, a digital light processor (digital light processor, DLP), or any type of another display.

The coding system 10 further includes a training engine 25. The training engine 25 is configured to train the encoder 20 (especially an entropy encoding unit 270 in the encoder 20) or the decoder 30 (especially an entropy decoding unit 304 in the decoder 30), to perform entropy encoding on a to-be-encoded image block based on an estimated probability distribution obtained through estimation. For detailed descriptions of the training engine 25, refer to the following method embodiments.

Although FIG. 1a shows the source device 12 and the destination device 14 as separate devices, a device embodiment may alternatively include both the source device 12 and the destination device 14 or functions of both the source device 12 and the destination device 14, that is, the source device 12 or a corresponding function and the destination device 14 or a corresponding function. In these embodiments, the source device 12 or the corresponding function and the destination device 14 or the corresponding function may be implemented by using same hardware and/or software or by using separate hardware and/or software or any combination thereof.

According to the descriptions, it is clear for the skilled persons that, the existence and (exact) division into different units or functions in the source device 12 and/or the destination device 14 as shown in FIG. 1a may vary depending on an actual device and application.

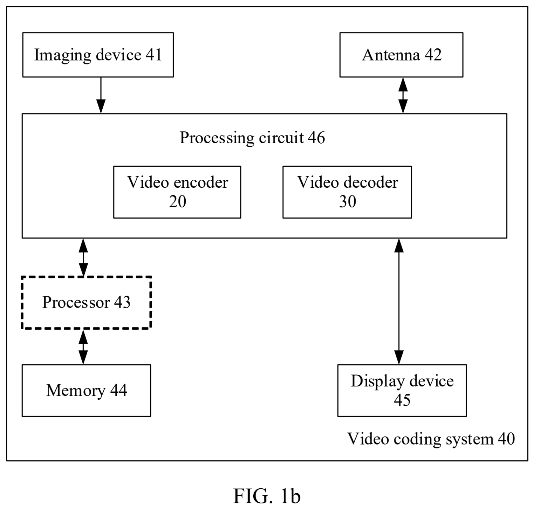

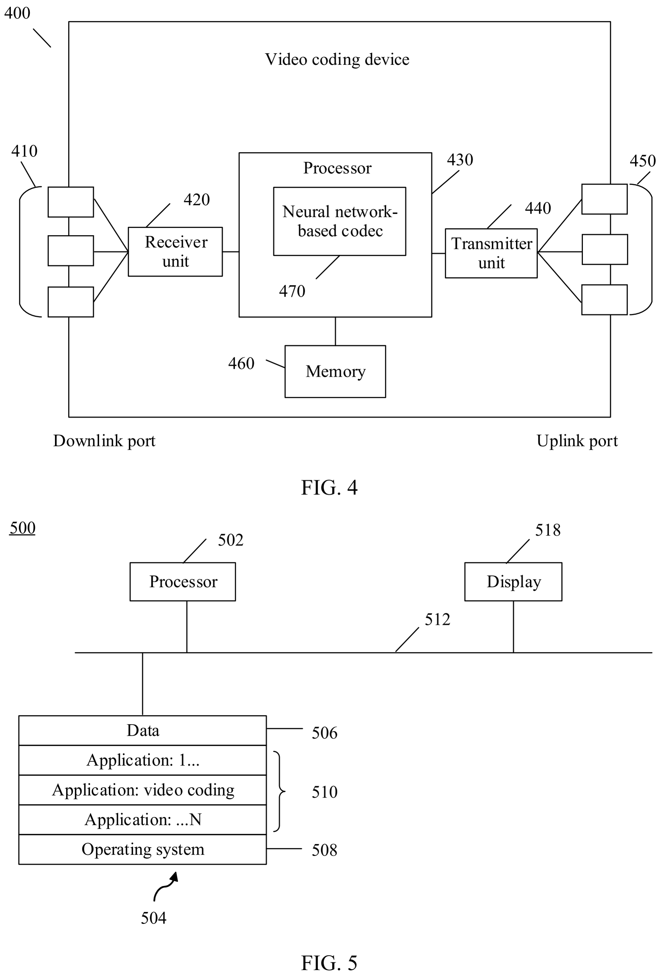

FIG. 1b is an example block diagram of a video coding system 40 according to an embodiment of this application. The encoder 20 (for example, the video encoder 20) or the decoder 30 (for example, the video decoder 30) or both the encoder 20 and the decoder 30 may be implemented via a processing circuit of the video coding system 40 shown in FIG. 1b, for example, one or more microprocessors, a digital signal processor (digital signal processor, DSP), an application-specific integrated circuit (application-specific integrated circuit, ASIC), a field-programmable gate array (field-programmable gate array, FPGA), discrete logic, hardware, a video coding dedicated processor, or any combination thereof. Refer to FIG. 2 and FIG. 3. FIG. 2 is an example block diagram of a video encoder according to an embodiment of this application, and FIG. 3 is an example block diagram of a video decoder according to an embodiment of this application. The encoder 20 may be implemented via a processing circuit 46, to include various modules described based on the encoder 20 in FIG. 2 and/or any other encoder system or subsystem described in this specification. The decoder 30 may be implemented via the processing circuit 46, to include various modules described based on the decoder 30 in FIG. 3 and/or any other decoder system or subsystem described in this specification. The processing circuit 46 may be configured to perform various operations in the following. As shown in FIG. 4, if the technologies are implemented partially in software, a device may store instructions for the software in a suitable non-transitory computer-readable storage medium and may execute the instructions in hardware using one or more processors to perform the technologies in embodiments of this application. Either of the video encoder 20 and the video decoder 30 may be integrated as a part of a combined encoder/decoder (encoder/decoder, CODEC) in a single device, for example, as shown in FIG. 1b.

The source device 12 and the destination device 14 may include any one of various devices, including any type of handheld or stationary devices, for example, notebook computers or laptop computers, mobile phones, smart phones, tablets or tablet computers, cameras, desktop computers, set-top boxes, televisions, display devices, digital media players, video gaming consoles, video streaming devices (such as content service servers or content delivery servers), broadcast receiver devices, broadcast transmitter devices, monitor devices, or the like and may use no or any type of operating system. The source device 12 and the destination device 14 may also be devices in a cloud computing scenario, for example, virtual machines in the cloud computing scenario. In some cases, the source device 12 and the destination device 14 may be equipped with components for wireless communication. Therefore, the source device 12 and the destination device 14 may be wireless communication devices.

A virtual scenario application (application, APP), such as a virtual reality (virtual reality, VR) application, an augmented reality (augmented reality, AR) application, or a mixed reality (mixed reality, MR) application may be installed on each of the source device 12 and the destination device 14, and the VR application, the AR application, or the MR application may be run based on a user operation (for example, tapping, touching, sliding, shaking, or voice control). The source device 12 and the destination device 14 may capture images/videos of any object in an environment via a camera and/or a sensor, and then display a virtual object on a display device based on the captured images/videos. The virtual object may be a virtual object (namely, an object in a virtual environment) in a VR scenario, an AR scenario, or an MR scenario.

It should be noted that, in embodiments of this application, the virtual scenario applications in the source device 12 and the destination device 14 may be built-in applications of the source device 12 and the destination device 14, or may be applications that are provided by a third-party service provider and that are installed by a user. This is not specifically limited herein.

In addition, real-time video transmission applications, such as live broadcast applications, may be installed on the source device 12 and the destination device 14. The source device 12 and the destination device 14 may capture images/videos via the camera, and then display the captured images/videos on the display device.

In some cases, the video coding system 10 shown in FIG. 1a is merely an example and the technologies provided in embodiments of this application are applicable to video coding settings (for example, video encoding or video decoding). These settings do not necessarily include any data communication between an encoding device and a decoding device. In other examples, data is retrieved from a local memory, sent through a network, or the like. A video encoding device may encode the data and store the data in the memory, and/or a video decoding device may retrieve the data from the memory and decode the data. In some examples, encoding and decoding are performed by devices that do not communicate with each other, but simply encode data to the memory and/or retrieve and decode data from the memory.

FIG. 1b is the example block diagram of the video coding system 40 according to this embodiment of this application. As shown in FIG. 1b, the video coding system 40 may include an imaging device 41, the video encoder 20, and the video decoder 30 (and/or a video encoder/decoder implemented via the processing circuit 46), an antenna 42, one or more processors 43, one or more memories 44, and/or a display device 45.

As shown in FIG. 1b, the imaging device 41, the antenna 42, the processing circuit 46, the video encoder 20, the video decoder 30, the processor 43, the memory 44, and/or the display device 45 can communicate with each other. In different examples, the video coding system 40 may include only the video encoder 20 or only the video decoder 30.

In some examples, the antenna 42 may be configured to transmit or receive an encoded bitstream of video data. In addition, in some examples, the display device 45 may be configured to present video data. The processing circuit 46 may include application-specific integrated circuit (application-specific integrated circuit, ASIC) logic, a graphics processing unit, a general-purpose processor, or the like. The video coding system 40 may also include the optional processor 43. The optional processor 43 may similarly include application-specific integrated circuit (application-specific integrated circuit, ASIC) logic, a graphics processing unit, a general-purpose processor, or the like. In addition, the memory 44 may be a memory of any type, for example, a volatile memory (for example, a static random access memory (static random access memory, SRAM) or a dynamic random access memory (dynamic random access memory, DRAM)) or a non-volatile memory (for example, a flash memory). In a non-limitative example, the memory 44 may be implemented by a cache memory. In other examples, the processing circuit 46 may include a memory (for example, a cache) to implement an image buffer.

In some examples, the video encoder 20 implemented via a logic circuit may include an image buffer (for example, implemented via the processing circuit 46 or the memory 44) and a graphics processing unit (for example, implemented via the processing circuit 46). The graphics processing unit may be communicatively coupled to the image buffer. The graphics processing unit may be included in the video encoder 20 implemented via the processing circuit 46, to implement various modules described with reference to FIG. 2 and/or any other encoder system or subsystem described in this specification. The logic circuit may be configured to perform various operations described in this specification.

In some examples, the video decoder 30 may be implemented via the processing circuit 46 in a similar manner, to implement various modules described based on the video decoder 30 in FIG. 3 and/or any other decoder system or subsystem described in this specification. In some examples, the video decoder 30 implemented via the logic circuit may include an image buffer (for example, implemented via the processing circuit 46 or the memory 44) and a graphics processing unit (for example, implemented via the processing circuit 46). The graphics processing unit may be communicatively coupled to the image buffer. The graphics processing unit may be included in the video decoder 30 implemented via the processing circuit 46, to implement various modules described with reference to FIG. 3 and/or any other decoder system or subsystem described in this specification.

In some examples, the antenna 42 may be configured to receive an encoded bitstream of video data. As described, the encoded bitstream may include data, an indicator, an index value, mode selection data, or the like related to video frame encoding described in this specification, for example, data related to coding partitioning (for example, a transform coefficient or a quantized transform coefficient, an optional indicator (as described), and/or data defining the coding partitioning). The video coding system 40 may also include the video decoder 30 that is coupled to the antenna 42 and that is configured to decode the encoded bitstream. The display device 45 is configured to present a video frame.

It should be understood that in this embodiment of this application, for the example described based on the video encoder 20, the video decoder 30 may be configured to perform a reverse process. For a signaling syntax element, the video decoder 30 may be configured to: receive and parse the syntax element, and decode related video data accordingly. In some examples, the video encoder 20 may perform entropy encoding on the syntax element, to obtain an encoded video bitstream. In such examples, the video decoder 30 may parse such syntax element and decode the related video data accordingly.

For ease of description, embodiments of this application are described based on versatile video coding (versatile video coding, VVC) reference software or high efficiency video coding (high- efficiency video coding, HEVC) developed by the joint collaboration team on video coding (joint collaboration team on video coding, JCT-VC) constituted by the ITU-T video coding experts group (video coding experts group, VCEG) and the ISO/IEC moving picture experts group (motion picture experts group, MPEG). Persons of ordinary skill in the art understand that embodiments of this application are not limited to the HEVC or the VVC.

Encoder and encoding method

As shown in FIG. 2, the video encoder 20 includes an input end (or input interface) 201, a residual calculation unit 204, a transform processing unit 206, a quantization unit 208, a dequantization unit 210, an inverse transform processing unit 212, a reconstruction unit 214, a loop filter 220, a decoded picture buffer (decoded picture buffer, DPB) 230, a mode selection unit 260, an entropy encoding unit 270, and an output end (or output interface) 272. The mode selection unit 260 may include an inter prediction unit 244, an intra prediction unit 254, and a partitioning unit 262. The inter prediction unit 244 may include a motion estimation unit and a motion compensation unit (not shown). The video encoder 20 shown in FIG. 2 may also be referred to as a hybrid video encoder or a video encoder based on a hybrid video codec.

Images and image partitioning (images and blocks)

The encoder 20 may be configured to receive, for example, via the input end 201, the image (or image data) 17, for example, an image in a sequence of images forming a video or video sequence. The received image or image data may also be the preprocessed image (or preprocessed image data) 19. For ease of simplicity, the image 17 is used in the following description. The image 17 may also be referred to as a current image or a to-be-encoded image (in particular in video coding to distinguish the current image from other images, for example, previously encoded and/or decoded images of a same video sequence, namely, a video sequence that also includes the current image).

A (digital) image is or may be considered as a two-dimensional array or matrix including samples with intensity values. A sample in the array may also be referred to as a pixel (pixel or pel) (a short form of an image element). A quantity of samples in horizontal and vertical directions (or axes) of the array or image defines a size and/or resolution of the image. For representation of color, three color components are usually employed. To be specific, the image may be represented as or include three sample arrays. In an RBG format or color space, an image includes corresponding red, green and blue sample arrays. However, in video coding, each pixel is usually represented in a luminance/chrominance format or color space, for example, YCbCr, which includes a luminance component indicated by Y (sometimes indicated by L) and two chrominance components indicated by Cb and Cr. The luminance (luma) component Y represents luminance or gray level intensity (for example, both are the same in a gray-scale image), while the two chrominance (chrominance, chroma for short) components Cb and Cr represent chrominance or color information components. Accordingly, an image in a YCbCr format includes a luminance sample array of luminance sample values (Y), and two chrominance sample arrays of chrominance values (Cb and Cr). Images in the RGB format may be converted or transformed into the YCbCr format and vice versa. The process is also referred to as color transformation or conversion. If an image is monochrome, the image may include only a luminance sample array. Accordingly, an image may be, for example, a luminance sample array in a monochrome format or a luminance sample array and two corresponding chrominance sample arrays in 4:2:0, 4:2:2, and 4:4:4 color formats.

In an embodiment, an embodiment of the video encoder 20 may include an image partitioning unit (not shown in FIG. 2) configured to partition the image 17 into a plurality of (usually non-overlapping) image blocks 203. These blocks may also be referred to as root blocks, macro blocks (H.264/AVC) or coding tree blocks (coding tree block, CTB) or coding tree units (coding tree unit, CTU) in the H.265/HEVC and VVC standards. The partitioning unit may be configured to use a same block size for all images of a video sequence and a corresponding grid defining the block size, or to change a block size between images or image subsets or image groups, and partition each image into corresponding blocks.

In another embodiment, the video encoder may be configured to directly receive the block 203 of the image 17, for example, one, several or all the blocks forming the image 17. The image block 203 may also be referred to as a current image block or a to-be-encoded image block.

Like the image 17, the image block 203 is also or may be considered as a two-dimensional array or matrix including samples with intensity values (sample values), but of a smaller dimension than the image 17. In other words, the block 203 may include one sample array (for example, a luminance array in a case of a monochrome image 17, or a luminance or chrominance array in a case of a color image), three sample arrays (for example, one luminance array and two chrominance arrays in a case of a color image 17), or any other quantity and/or type of arrays based on a used color format. Quantities of samples of the block 203 in the horizontal and vertical directions (or axes) define a size of the block 203. Accordingly, a block may be an array of M×N (M columns×N rows) samples, an array of M×N transform coefficients, or the like.

In an embodiment, the video encoder 20 shown in FIG. 2 may be configured to encode the image 17 block by block, for example, encode and predict each block 203.

In an embodiment, the video encoder 20 shown in FIG. 2 may be further configured to partition and/or encode the image based on a slice (also referred to as a video slice). The image may be partitioned into or encoded based on one or more slices (usually non-overlapping). Each slice may include one or more blocks (for example, coding tree units CTU) or one or more groups of blocks (for example, tiles (tiles) in the H.265/HEVC/VVC standard and bricks (bricks) in the VVC standard).

In an embodiment, the video encoder 20 shown in FIG. 2 may be further configured to partition and/or encode the image based on slices/tile groups (also referred to as video tile groups) and/or tiles (also referred to as video tiles). The image may be partitioned into or encoded based on one or more slices/tile groups (usually non-overlapping), and each slice/tile group may include one or more blocks (for example, CTUs), one or more tiles, or the like. Each tile may be of a rectangular shape and may include one or more complete or fractional blocks (for example, CTUs).

Residual calculation

The residual calculation unit 204 is configured to calculate a residual block 205 based on the image block (or an original block) 203 and a prediction block 265 (where the prediction block 265 is described in detail subsequently), for example, obtain the residual block 205 in pixel domain by subtracting a sample value of the prediction block 265 from a sample value of the image block 203 sample by sample (pixel by pixel).

Quantization

The quantization unit 208 is configured to quantize transform coefficients 207 to obtain quantized transform coefficients 209, for example, by applying scalar quantization or vector quantization. The quantized transform coefficient 209 may also be referred to as a quantized residual coefficient 209.

A quantization process may reduce a bit depth related to some or all of the transform coefficients 207. For example, an n-bit transform coefficient may be rounded down to an m-bit transform coefficient during quantization, where n is greater than m. A quantization degree may be modified by adjusting a quantization parameter (quantization parameter, QP). For example, for scalar quantization, different scales may be applied to achieve finer or coarser quantization. A smaller quantization step size corresponds to finer quantization, and a larger quantization step size corresponds to coarser quantization. An appropriate quantization step size may be indicated by a quantization parameter (quantization parameter, QP). For example, the quantization parameter may be an index of a predefined set of appropriate quantization step sizes. For example, a smaller quantization parameter may correspond to finer quantization (a smaller quantization step size) and a larger quantization parameter may correspond to coarser quantization (a larger quantization step size), or vice versa. The quantization may include division by a quantization step size, and corresponding or inverse dequantization, for example, performed by the dequantization unit 210, may include multiplication by the quantization step size. Embodiments according to some standards such as HEVC, may be used to use a quantization parameter to determine a quantization step size. Generally, a quantization step size may be calculated based on a quantization parameter based on a fixed point approximation of an equation including division. Additional scaling factors may be introduced for quantization and dequantization to restore a norm of a residual block, where the norm of the residual block may be modified because of a scale used in the fixed point approximation of an equation for the quantization step size and the quantization parameter. In one example implementation, scales of inverse transform and dequantization may be combined. Alternatively, customized quantization tables may be used and indicated from an encoder to a decoder, for example, in a bitstream. The quantization is a lossy operation, where a loss increases with increasing of the quantization step size.

In an embodiment, the video encoder 20 (correspondingly, the quantization unit 208) may be configured to output a quantization parameter (quantization parameter, QP), for example, directly output the quantization parameter or output the quantization parameter after the quantization parameter is encoded or compressed by the entropy encoding unit 270, so that, for example, the video decoder 30 can receive and use the quantization parameter for decoding.

Dequantization

The dequantization unit 210 is configured to perform the dequantization of the quantization unit 208 on quantized coefficients to obtain dequantized coefficients 211, for example, by applying the dequantization scheme of the quantization scheme applied by the quantization unit 208 based on or using a same quantization step size as the quantization unit 208. The dequantized coefficient 211 may also be referred to as a dequantized residual coefficient 211 and corresponds to the transform coefficient 207. However, due to a loss caused by the quantization, the dequantized coefficient 211 is usually not exactly the same as the transform coefficient.

Reconstruction

The reconstruction unit 214 (for example, an adder 214) is configured to add a transform block 213 (for example, a reconstructed residual block 213) to the prediction block 265 to obtain a reconstructed block 215 in pixel domain, for example, by adding a sample value of the reconstructed residual block 213 and the sample value of the prediction block 265.

Partitioning

The partitioning unit 262 may partition (or split) an image block (or a CTU) 203 into smaller partitions, for example, square or rectangular small blocks. For an image that has three sample arrays, a CTU includes a block of N×N luminance samples and two corresponding blocks of chrominance samples. A maximum allowed size of a luminance block in the CTU is specified to be 128×128 in the developing versatile video coding (versatile video coding, VVC) standard, but may be specified to be a value other than 128×128 in the future, for example, 256×256. CTUs of an image may be clustered/-grouped as slices/tile groups, tiles, or bricks. A tile covers a rectangular region of an image, and a tile may be divided into one or more bricks. A brick includes a plurality of CTU rows in a tile. A tile that is not partitioned into a plurality of bricks can be referred to as a brick. However, a brick is a true subset of a tile and is not referred to as a tile. There are two modes of tile groups are supported in VVC, namely a raster-scan slice/tile group mode and a rectangular slice mode. In the raster-scan tile group mode, a slice/tile group includes a sequence of tiles in tile raster scan of an image. In the rectangular slice mode, a slice includes a plurality of bricks of an image that collectively form a rectangular region of the image. Bricks within a rectangular slice are in an order of brick raster scan of the slice. These smaller blocks (which may also be referred to as sub-blocks) may be further partitioned into even smaller partitions. This is also referred to as tree partitioning or hierarchical tree partitioning. A root block, for example, at a root tree level 0 (a hierarchy level 0, and a depth 0) may be recursively partitioned into two or more blocks at a next lower tree level, for example, nodes at a tree level 1 (a hierarchy level 1, and a depth 1). These blocks may be again partitioned into two or more blocks of a next lower level, for example, a tree level 2 (a hierarchy level 2, a depth 2), and the like, until the partitioning is terminated (for example, because a termination criterion is fulfilled, for example, a maximum tree depth or minimum block size is reached). Blocks which are not further partitioned are also referred to as leaf blocks or leaf nodes of the tree. A tree using partitioning into two partitions is referred to as a binary tree (binary- tree, BT), a tree using partitioning into three partitions is referred to as a ternary tree (ternary- tree, TT), and a tree using partitioning into four partitions is referred to as a quad tree (quad- tree, QT).

Entropy encoding

The entropy encoding unit 270 is configured to apply, for example, an entropy encoding algorithm or scheme (for example, a variable length coding (variable length coding, VLC) scheme, a context-adaptive VLC (context adaptive VLC, CALVC) scheme, an arithmetic coding scheme, a binarization algorithm, context-adaptive binary arithmetic coding (context adaptive binary arithmetic coding, CABAC), syntax-based context-adaptive binary arithmetic coding (syntax-based context-adaptive binary arithmetic coding, SBAC), probability interval partitioning entropy (probability interval partitioning entropy, PIPE) coding or another entropy encoding methodology or technique) on the quantization residual coefficients 209, inter prediction parameters, intra prediction parameters, loop filter parameters and/or other syntax elements to obtain the encoded image data 21 which can be output via the output end 272, for example, in the form of an encoded bitstream 21, so that the video decoder 30 and the like can receive and use the parameters for decoding. The encoded bitstream 21 may be transmitted to the video decoder 30, or stored in a memory for subsequent transmission or retrieval by the video decoder 30.

Another structural variation of the video encoder 20 may be used to encode a video stream. For example, a non-transform based encoder 20 may quantize a residual signal directly without the transform processing unit 206 for some blocks or frames. In another implementation, the encoder 20 may have the quantization unit 208 and the dequantization unit 210 combined into a single unit.

Decoder and decoding method

As shown in FIG. 3, the video decoder 30 is configured to receive the encoded image data 21 (for example, the encoded bitstream 21), for example, encoded by the encoder 20, to obtain a decoded image 331. The encoded image data or bitstream includes information for decoding the encoded image data, for example, data that represents image blocks of an encoded video slice (and/or a tile group or a tile) and associated syntax elements.

In the example in FIG. 3, the decoder 30 includes the entropy decoding unit 304, a dequantization unit 310, an inverse transform processing unit 312, a reconstruction unit 314 (for example, an adder 314), a loop filter 320, a decoded picture buffer (DBP) 330, a mode application unit 360, an inter prediction unit 344, and an intra prediction unit 354. The inter prediction unit 344 may be or include a motion compensation unit. In some examples, the video decoder 30 may perform a decoding process generally reciprocal to the encoding process described based on the video encoder 100 in FIG. 2.

As described in the encoder 20, the dequantization unit 210, the inverse transform processing unit 212, the reconstruction unit 214, the loop filter 220, the decoded picture buffer DPB 230, the inter prediction unit 344, and the intra prediction unit 354 further form a "built-in decoder" of the video encoder 20. Correspondingly, the dequantization unit 310 may be identical in function to the dequantization unit 110, the inverse transform processing unit 312 may be identical in function to the inverse transform processing unit 122, the reconstruction unit 314 may be identical in function to the reconstruction unit 214, the loop filter 320 may be identical in function to the loop filter 220, and the decoded picture buffer 330 may be identical in function to the decoded picture buffer 230. Therefore, explanations provided for the respective units and functions of the video encoder 20 are applicable to the corresponding units and functions of the video decoder 30.

Entropy decoding

The entropy decoding unit 304 is configured to: parse the bitstream 21 (or usually the encoded image data 21), and perform entropy decoding on the encoded image data 21 to obtain a quantized coefficient 309 and/or a decoded coding parameter (not shown in FIG. 3), for example, any one or all of an inter prediction parameter (for example, a reference image index and a motion vector), an intra prediction parameter (for example, an intra prediction mode or an index), a transform parameter, a quantization parameter, a loop filter parameter, and/or another syntax element. The entropy decoding unit 304 may be configured to apply a decoding algorithm or scheme corresponding to the encoding scheme of the entropy encoding unit 270 of the encoder 20. The entropy decoding unit 304 may be further configured to provide the inter prediction parameter, the intra prediction parameter, and/or another syntax element to the mode application unit 360, and provide another parameter to another unit of the decoder 30. The video decoder 30 may receive a syntax element at a video slice level and/or a video block level, and further receive or use, tile groups and/or tiles and respective syntax elements as an alternative to slices and the respective syntax elements.

Dequantization

The dequantization unit 310 may be configured to receive a quantization parameter (quantization parameter, QP) (or generally, information related to the dequantization) and a quantized coefficient from the encoded image data 21 (for example, parsed and/or decoded by the entropy decoding unit 304), and dequantize the decoded quantized coefficient 309 based on the quantization parameter, to obtain a dequantized coefficient 311. The dequantized coefficient 311 may also be referred to as a transform coefficient 311. The dequantization process may include use of a quantization parameter calculated by the video encoder 20 for each video block in a video slice to determine a degree of quantization and a degree of dequantization that needs to be applied.

Reconstruction

The reconstruction unit 314 (for example, the adder 314) is configured to add a reconstructed residual block 313 to a prediction block 365 to obtain a reconstructed block 315 in pixel domain, for example, by adding a sample value of the reconstructed residual block 313 and a sample value of the prediction block 365.

Other variations of the video decoder 30 may be used to decode the encoded image data 21. For example, the decoder 30 may generate an output video stream without the loop filtering unit 320. For example, a non-transform based decoder 30 can dequantize a residual signal directly without the inverse transform processing unit 312 for some blocks or frames. In another implementation, the video decoder 30 can have the dequantization unit 310 and the inverse transform processing unit 312 combined into a single unit.

It should be understood that, in the encoder 20 and the decoder 30, a processing result of a current step may be further processed and then output to a next step. For example, after interpolation filtering, motion vector derivation, or loop filtering, a further operation, for example, a clip (clip) or shift (shift) operation, may be performed on a processing result of the interpolation filtering, motion vector derivation, or loop filtering.

It should be noted that further operations may be performed on derived motion vectors of a current block (including but not limit to control point motion vectors in an affine mode, sub-block motion vectors in affine, planar, and ATMVP modes, temporal motion vectors, and the like). For example, a value of a motion vector is limited to a predefined range based on a representing bit of the motion vector. If the representing bit of the motion vector is bitDepth, the range is from-2^(bitDepth-1) to 2^(bitDepth-1)-1, where "^" represents exponentiation. For example, if bitDepth is set to 16, the range is from -32768 to 32767; and if bitDepth is set to 18, the range is from -131072 to 131071. For example, the value of the derived motion vector (for example, MVs of four 4×4 sub-blocks within one 8×8 block) is constrained, so that a maximum difference between integer parts of the four 4×4 sub-block MVs does not exceed N pixels, for example, does not exceed one pixel. Two methods for limiting the motion vector based on bitDepth are provided herein.

Although video coding is mainly described in the foregoing embodiments, it should be noted that embodiments of the coding system 10, the encoder 20, and the decoder 30 and other embodiments described in this specification may also be used for still image processing or coding, that is, processing or coding of a single image independent of any preceding or consecutive images in video coding. In general, if image processing is limited to a single image 17, the inter prediction unit 244 (encoder) and the inter prediction unit 344 (decoder) may not be available. All other functions (also referred to as tools or technologies) of the video encoder 20 and the video decoder 30 may also be used for still image processing, for example, residual calculation 204/304, transform 206, quantization 208, dequantization 210/310, (inverse) transform 212/312, partitioning 262/362, intra prediction 254/354, and/or loop filtering 220/320, entropy encoding 270, and entropy decoding 304.

FIG. 4 is an example block diagram of a video coding device 400 according to an embodiment of this application. The video coding device 400 is suitable for implementing the disclosed embodiments described in this specification. In an embodiment, the video coding device 400 may be a decoder such as the video decoder 30 in FIG. 1a or an encoder such as the video encoder 20 in FIG. 1a.

The video coding device 400 includes an ingress port 410 (or input port 410) and a receiver unit (receiver unit, Rx) 420 that are configured to receive data; a processor, logic unit, or central processing unit (central processing unit, CPU) 430 configured to process the data, for example, the processor 430 may be a neural network processing unit 430; a transmitter unit (transmitter unit, Tx) 440 and an egress port 450 (or output port 550) that are configured to transmit the data; and a memory 460 configured to store the data. The video coding device 400 may further include an optical-to-electrical (optical-to-electrical, OE) component and an electrical-to-optical (electrical-to-optical, EO) component that are coupled to the ingress port 410, the receiver unit 420, the transmitter unit 440, and the egress port 450 for egress or ingress of an optical or electrical signal.

The processor 430 is implemented by hardware and software. The processor 430 may be implemented as one or more processor chips, cores (for example, multi-core processors), FPGAs, ASICs, and DSPs. The processor 430 communicates with the ingress port 410, the receiver unit 420, the transmitter unit 440, the egress port 450, and the memory 460. The processor 430 includes a neural network-based codec 470. The neural network-based codec 470 implements embodiments disclosed above. For example, the neural network-based codec 470 performs, processes, prepares, or provides various coding operations. Therefore, inclusion of the neural network-based codec 470 substantially improves a function of the video coding device 400 and affects switching of the video coding device 400 to a different status. Alternatively, the neural network-based codec 470 is implemented according to instructions stored in the memory 460 and executed by the processor 430.

The memory 460 includes one or more disks, tape drives, and solid-state drives and may be used as an overflow data storage device, to store programs when such programs are selected for execution, and to store instructions and data that are read during program execution. The memory 460 may be volatile and/or non-volatile, and may be a read-only memory (read-only memory, ROM), a random access memory (random access memory, RAM), a ternary content-addressable memory (ternary content-addressable memory, TCAM), and/or a static random access memory (static random- access memory, SRAM).

FIG. 5 is an example block diagram of an apparatus 500 according to an embodiment of this application. The apparatus 500 may be used as either or both of the source device 12 and the destination device 14 in FIG. 1a.

A processor 502 in the apparatus 500 may be a central processing unit. Alternatively, the processor 502 may be any other type of device or a plurality of devices, capable of manipulating or processing information existing or to be developed. Although the disclosed implementations may be implemented by a single processor such as the processor 502 shown in the figure, advantages in speed and efficiency can be achieved by using more than one processor.

In an implementation, a memory 504 in the apparatus 500 can be a read only memory (ROM) device or a random access memory (RAM) device. Any other proper type of storage device may be used as the memory 504. The memory 504 may include code and data 506 that are accessed by the processor 502 through a bus 512. The memory 504 may further include an operating system 508 and an application 510, and the application 510 includes at least one program that allows the processor 502 to perform the method in this specification. For example, the application 510 may include applications 1 to N, and further include a video coding application that performs the method in this specification.

The apparatus 500 may further include one or more output devices such as a display 518. For example, the display 518 may be a touch sensitive display that combines a display with a touch sensitive element that may be configured to sense a touch input. The display 518 may be coupled to the processor 502 through the bus 512.

Although the bus 512 in the apparatus 500 is described as a single bus in this specification, the bus 512 may include a plurality of buses. Further, a secondary memory may be directly coupled to another component of the apparatus 500 or may be accessed via a network, and may include a single integrated unit such as a memory card or a plurality of units such as a plurality of memory cards. Therefore, the apparatus 500 may have a variety of configurations.

Image coding

Currently, multimedia data accounts for the majority of Internet traffic. Compression of image data plays an important role in storage and efficient transmission of the multimedia data. Therefore, the image coding technology is a very practical technology. It should be noted that Chinese translation of the English terms "image coding" and "image encoding" is usually "image coding". Image coding is generalized, and includes encoding an image into a bitstream and decoding (decoding) a bitstream into an image.

Image encoding refers to only processing of encoding an image into a bitstream. Research of image coding has a long history. Researchers propose a large quantity of methods and formulate an I-frame coding method for various image coding standards and video coding standards such as JPEG, JPEG2000, JPEG-XL, JPEG-XX, WebP, H.264/AVC, H.264/HEVC, H.26/VVC, AVS3, and AV1. Most of these coding methods are based on transform, prediction, and entropy coding techniques. Although these coding methods have been widely used currently, due to an increase in a data amount of an image and emergence of new media types, a coding method with higher compression efficiency is needed.

Deep learning-based image coding

In recent years, researchers have studied a deep learning-based image coding method. Some researchers have obtained good results. For example, Balle and others propose an end-to-end optimized image coding method. The method is better than existing best image coding, and is even better than the existing best conventional coding standard H.265/HEVC.

Deep learning-based image coding is based on a deep neural network, usually a convolutional neural network. An image coding method based on a transformer network is proposed in some research work. A structure of the deep neural network may be manually designed, or may be obtained through neural architecture search (neural architecture search, NAS). Parameters of the deep neural network are obtained according to a loss function and a back propagation algorithm.

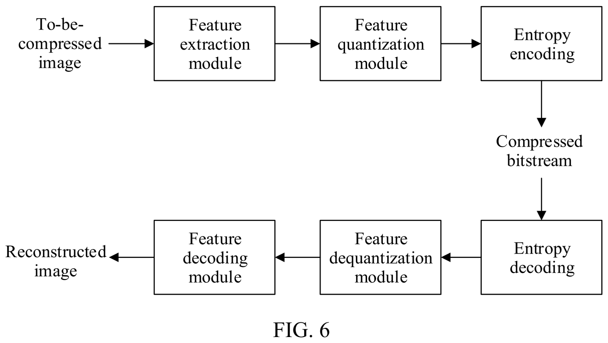

FIG. 6 shows a typical deep learning-based image compression method, which is also referred to as a neural network-based image compression method. Usually, the neural network-based image compression method includes the following parts: a feature extraction module, a feature quantization module, an entropy encoding module, an entropy decoding module, a feature dequantization module, and a feature decoding module. At an encoder side, the feature extraction module may obtain an extracted three-dimensional feature map based on a non-linear mapping activation function and through multi-layer convolution superposition. The feature quantization module quantizes an eigenvalue of a floating-point number by quantizing the eigenvalue, to obtain a quantized eigenvalue. Lossless entropy encoding is performed on the quantized eigenvalue to obtain an encoded bitstream. When an entropy-encoded bitstream is received, a decoder performs lossless entropy decoding to obtain a three-dimensional quantized eigenvalue. The feature decoding module decodes a feature into a reconstructed image, to implement decoding.

After a to-be-compressed image passes through the feature extraction module and the feature quantization module, a three-dimensional feature quantization map is obtained. When processing each eigenvalue in the three-dimensional feature quantization map, the entropy encoding module may obtain a probability distribution of the eigenvalue through estimation based on a processed eigenvalue in a neighborhood as a context, and perform subsequent encoding based on the probability distribution to obtain an encoded bitstream.

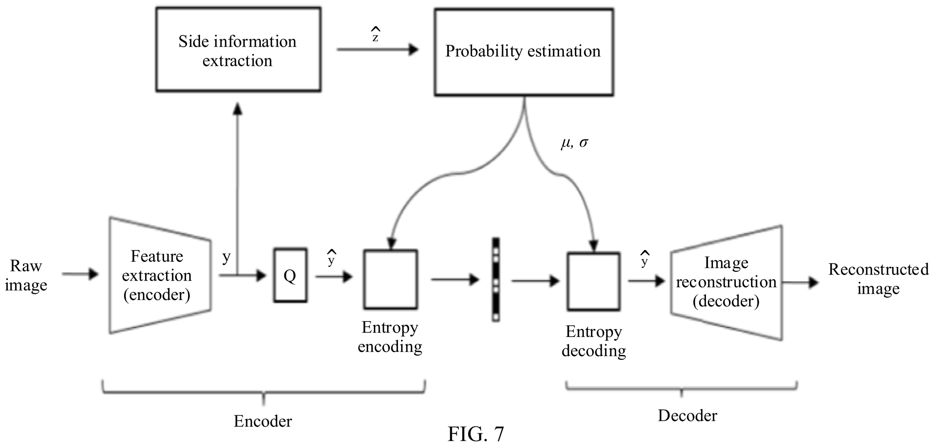

With excellent performance of deep learning in various fields, researchers propose a deep learning-based end-to-end image encoding solution. FIG. 7 shows an encoding framework. Specific technical solutions are as follows. At the encoder side, a raw image is input into the feature extraction module, and a feature map is output. The feature map passes through a side information extraction module, and side information $\hat{z}$ is output. At the encoder side and a decoder side, $\hat{z}$ is input into a probability estimation module, and a probability distribution of each feature element $\hat{y}[x][y][i]$ is output to obtain a value $\hat{y}[x][y][i]$ of the to-be-encoded feature element. In addition, the feature map is input into the quantization module to obtain a quantized feature map $\hat{y}$. The entropy encoding module performs, based on the probability distribution of each feature element $\hat{y}[x][y][i]$, entropy encoding on each feature element, to obtain an encoded bitstream, where $\hat{y}[x][y][i]$ is in the quantized feature map $\hat{y}$.

At the decoder side, the decoder parses a bitstream, and outputs the probability distribution $\hat{y}$ of a to-be-encoded symbol based on additional information $\hat{z}$, to learn that a value $\hat{y}[x][y][i]$ of a to-be-decoded feature element is k. The entropy decoding module performs, based on the probability distribution of each feature element $\hat{y}[x][y][i]$, arithmetic decoding on each feature element, to obtain a value $\hat{y}[x][y][i]$ of the feature element, where $\hat{y}[x][y][i]$ is in the quantized feature map $\hat{y}$. The feature map $\hat{y}$ is input into an image reconstruction module, and a reconstructed image is output.

Neural network

The neural network may include a neuron. The neuron may be an operation unit that uses $x_s$ and an intercept 1 as inputs. An output of the operation unit may be:

$$h_{W,b}(x) = f(W^T x) = f\left(\sum_{s=1}^{n} W_s x_s + b\right)$$

Herein, s=s=1, 2, ..., n, where n is a natural number greater than 1, $W_s$ is a weight of $x_s$, b is a bias of the neuron, and f is an activation function (activation function) of the neuron, and is used to introduce a non-linear feature into the neural network, to convert an input signal in the neuron into an output signal. The output signal of the activation function may serve as an input of a next convolutional layer. The activation function may be a sigmoid function. The neural network is a network formed by connecting a plurality of single neurons. Specifically, an output of one neuron may be an input to another neuron. An input of each neuron may be connected to a local receptive field of a previous layer to extract a feature of the local receptive field. The local receptive field may be a region including several neurons.

Convolutional neural network

The convolutional neural network (convolutional neural network, CNN) is a deep neural network with a convolutional structure. The convolutional neural network includes a feature extractor, and the feature extractor includes a convolutional layer and a subsampling layer. The feature extractor may be considered as a filter. The convolutional layer is a neuron layer that is in the convolutional neural network and at which convolution processing is performed on an input signal. At the convolutional layer of the convolutional neural network, one neuron may be connected only to some adjacent-layer neurons. The convolutional layer usually includes several feature planes, and each feature plane may include some neurons arranged in a rectangle. Neurons of a same feature plane share a weight, and the shared weight herein is a convolution kernel. Weight sharing may be understood as that an image information extraction manner is irrelevant to a location. The convolution kernel may be initialized in a form of a random-size matrix. In a process of training the convolutional neural network, the convolution kernel may obtain an appropriate weight through learning. In addition, through weight sharing, connections between layers in the convolutional neural network are directly reduced and an overfitting risk is lowered.

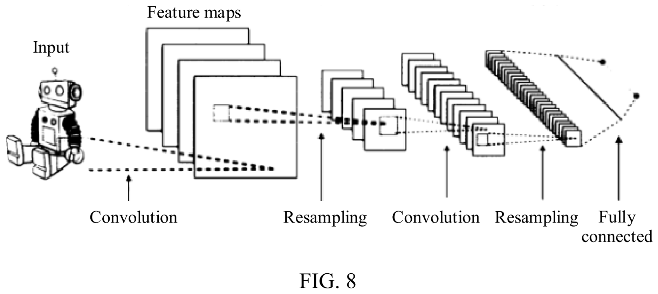

FIG. 8 schematically shows a general concept of processing by a neural network such as a CNN. The convolutional neural network includes an input layer, an output layer, and a plurality of hidden layers. The input layer is a layer that provides an input (for example, a part of an image shown in FIG. 8) for processing. The hidden layers of the CNN usually include a series of convolutional layers, which are convolved with multiplication or other dot products. A result of a layer is one or more feature maps, sometimes referred to as a channel. Subsampling may be involved at some or all layers. Therefore, as shown in FIG. 8, the feature map may become smaller. An activation function of the CNN is usually a ReLU (rectified linear unit) layer, followed by additional convolution, such as a pooling layer, a fully connected layer, and a normalization layer, which are referred to as the hidden layers for inputs and outputs of the pooling layer, the fully connected layer, and the normalization layer being hidden by the activation function and final convolution. Although these layers are commonly referred to as the convolution, this is only a convention. Mathematically, the convolution is technically a sliding dot product or cross-correlation. This is important for an index of a matrix because the convolution affects how to determine a weight at a particular index point.

When a CNN used to process an image is programmed, as shown in FIG. 8, an input is a tensor having a shape of (image quantity) (image width)×(image height)×(image depth). After passing through the convolutional layers, the image is abstracted as a feature map having a shape of (image quantity)×(feature map width)×(feature map height)×(feature map channel). The convolutional layer of the neural network should have the following attributes: a convolution kernel (hyperparameter) defined by a width and a height; quantities (hyperparameters) of input and output channels; and a depth (input channel) of a convolutional filter being equal to a channel quantity (depth) of an input feature map.

In the past, a conventional multi-layer perceptron (MLP) model has been used for image recognition. However, due to full connectivity between nodes, the nodes have high dimensions and cannot be well scaled with higher resolution images. A 1000×1000 pixel image with RGB color channels has 3 million weights, which is excessively high to be effectively processed on scale in the case of full connectivity. In addition, a data spatial structure is not considered in this network architecture, and input pixels that are far away from each other are processed in a same way as pixels that are close to each other. This ignores locality of reference in image data both computationally and semantically. Therefore, full connectivity of neurons is wasteful for a purpose such as image recognition dominated by a spatial local input mode.

The convolutional neural network is a biologically inspired variant of a multi-layer perceptron, and is specifically designed to simulate behavior of visual cortex. These models alleviate challenges brought by an MLP architecture by utilizing strong spatial local correlations in natural images. The convolutional layer is a core construction block of the CNN. A parameter of the layer includes a set of learnable filters (the foregoing kernels) that have small receptive fields but extend to an entire depth of an input size. During forward passage, each filter performs convolution on a width and a height of the input size, calculates a dot product between an entry and an input of the filter, and generates a two-dimensional activation map of the filter. Therefore, a network learning filter is activated when detecting a specific type of feature at a specific spatial location in the input.

Activation maps of all filters are stacked along a depth dimension to form a complete output size of the convolutional layer. Therefore, each entry in the output size may also be interpreted as an output of a neuron that observes a small region in an input and shares a parameter with a neuron in a same activation map. A feature map or an activation map is an output activation of a given filter. The feature map and the activation have a same meaning. In some papers, the activation is referred to as the activation map due to the activation being mapping corresponding to activations of different parts of an image, and is also the feature map due to the activation being mapping for discovering a feature in the image. A high activation means that a function is found.

Another important concept of a cellular neural network is pooling, which is a form of non-linear downsampling. There are several non-linear functions that can implement pooling, where maximum pooling is most common. The maximum pooling divides an input image into a group of non-overlapping rectangles and outputs a maximum value for each of these sub-regions.

Intuitively, in comparison with another feature, an exact location of a feature is less important than a rough location of the feature. This is an idea of using pooling in a convolutional neural network. The pooling layer is used to gradually reduce a size of represented space, reduce a quantity of parameters, memory usage, and a calculation amount that are in the network, and therefore control overfitting. In a CNN architecture, it is common to periodically insert pooling layers between consecutive convolutional layers. A pooling operation provides another form of translation invariance.

The pooling layer independently operates each input depth slice and adjusts a size of the input depth slice in space. A most common form is a pooling layer with a filter whose size is 2×2 that applies 2 downsampling steps along a width and a height on each depth slice in an input and discards 75% activations. In this case, each maximum operation exceeds 4 digits. A depth size remains unchanged.

In addition to the maximum pooling, a pool unit may alternatively use another function, such as average pooling or L2-norm pooling. The average pooling has been used frequently in history. However, the average pooling has been recently used less compared to the maximum pooling, and performance of the maximum pooling is better in practice. Due to significant reduction in a representation size, there has been a recent trend to use smaller filters or discard the pooling layer completely. "Region of interest" pooling (also referred to as ROI pooling) is a variant of the maximum pooling, with a fixed output size and an input rectangle being a parameter. Pooling is an important part of a convolutional neural network for object detection based on a fast R-CNN architecture.

A ReLU is short for a rectified linear unit that uses a non-saturated activation function. By setting a negative value to zero, the ReLU can effectively remove the negative value from an activation mapping. The ReLU increases non-linear features for a decision-making function and the whole network without affecting a receptive field of a convolutional layer. Other functions are also used to increase non-linearity, such as a saturated hyperbolic tangent function and an S-shaped function. The ReLU is often more popular than another function because the ReLU trains a neural network several times faster without significantly affecting generalization accuracy.

After several convolutional layers and a maximum pooling layer, advanced inference in the neural network is completed by the fully connected layer. Neurons at the fully connected layer are connected to all activations at a previous layer, which is learned in a regular (non-convolutional) artificial neural network. Therefore, activations of the neurons at the fully connected layer may be calculated as an affine transformation, that is, matrix multiplication is followed by a bias offset (addition of learned or fixed bias vectors).

A "loss layer" specifies training a way to punish a deviation between prediction (output) and an actual label, and is usually a last layer of the neural network. Various loss functions suitable for different tasks can be used. The Softmax loss function is used to predict a single class in K mutually exclusive classes. The Sigmoid cross entropy loss function is used to predict K independent probability values in [0, 1]. The Euclidean loss function is used to return to an actual-value label.

In conclusion, FIG. 8 shows a data flow in a typical convolutional neural network. An input image passes through a convolutional layer and is abstracted as a feature map including several channels that correspond to a quantity of filters in a group of learnable filters (for example, one channel per filter) at the layer. The feature map is subsampled by, for example, the pooling layer. This reduces a quantity of dimensions of each channel of the feature map. Subsequent data enters another convolutional layer, and the layer may have different quantities of output channels, resulting in different quantities of channels of the feature map. As described above, quantities of input and output channels are hyperparameters of the layer. To establish network connectivity, these parameters need to be synchronized between two connected layers. For example, a quantity of input channels of a current layer should be equal to a quantity of output channels of a previous layer. For a first layer for processing input data (for example, an image), a quantity of input channels is usually equal to a quantity of channels represented by the data, for example, three channels represented by RGB or YUV for an image or video, or one channel represented by a gray-scale image or video.

During actual application of video image coding, different bit rates need to be allocated to a region of interest and a background region for coding, so that a customer requirement is met based on fewer bit rates.

Therefore, an embodiment of this application provides an encoding method encoding method, and the encoding method is applicable to an encoder/decoder network.

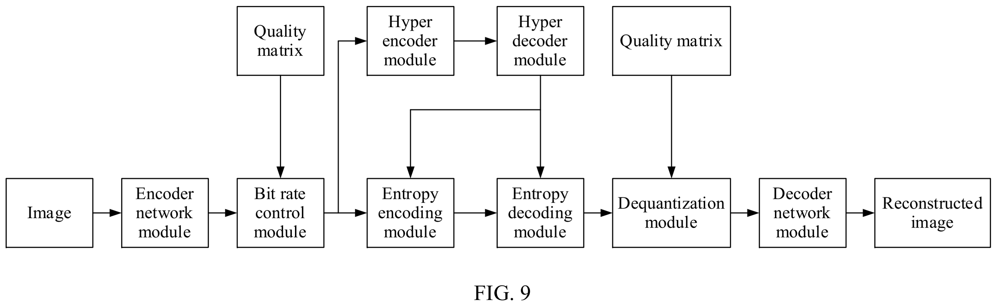

FIG. 9 shows a possible implementation of the encoder/decoder network. As shown in FIG. 9, the encoder/decoder network includes an encoder network module, a bit rate control module, an entropy encoding module, a hyper encoder module, a hyper decoder module, an entropy decoding module, a dequantization module, and a decoder network module. The bit rate control module may control, based on a quality matrix, an encoder to generate a bit rate of a bitstream.

An image input into the encoder of the encoder/decoder network is encoded by the encoder network module, the bit rate control module, the entropy encoding module, and the hyper encoder module to obtain a bitstream. After the bitstream is input into a decoder of the encoder/decoder network, the hyper decoder module, the entropy decoding module, the dequantization module, and the decoder network module reconstruct the input image to obtain a reconstructed image.

The image may be a YUV-domain image or an RGB-domain image.

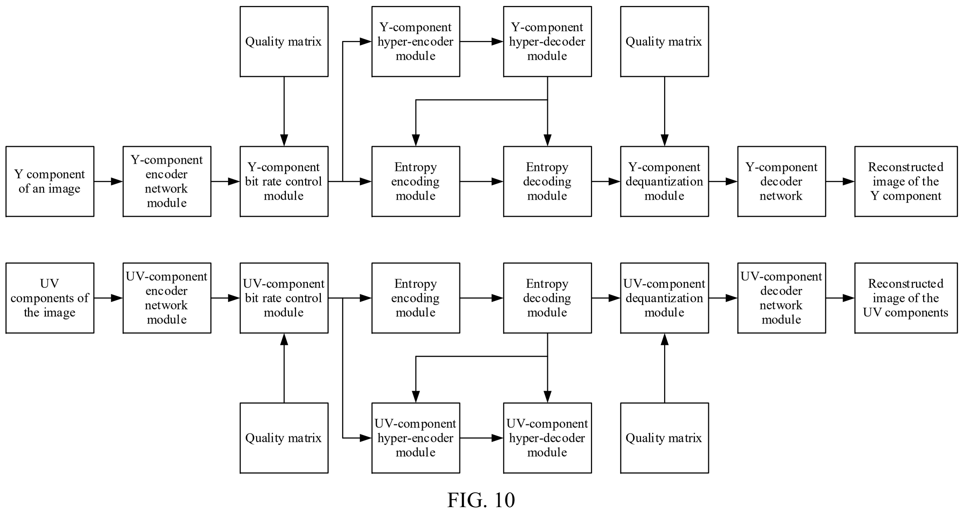

FIG. 10 shows another possible implementation of the encoder/decoder network. As shown in FIG. 10, the encoder/decoder network includes a Y-component encoder network module, a Y-component bit rate control module, a Y-component hyper encoder module, a UV-component encoder network module, a UV-component bit rate control module, a UV-component hyper encoder module, an entropy encoding module, an entropy decoding module, a Y-component hyper decoder module, a Y-component dequantization module, a Y-component decoder network module, a UV-component hyper decoder module, a UV-component dequantization module, and a UV-component decoder network module.

Different from the encoder/decoder network shown in FIG. 9, the encoder/decoder network shown in FIG. 10 may be used to separately encode/decode a Y component and UV components of a YUV image.

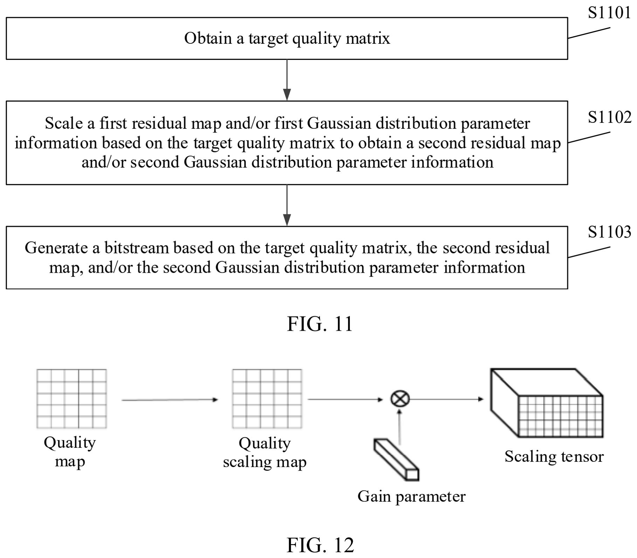

FIG. 11 shows an encoding method according to an embodiment of this application. As shown in FIG. 11, the encoding method may include the following steps.

S1101: Obtain a target quality matrix.

The target quality matrix represents image quality of each region in a residual map of a feature domain. The target quality matrix includes a plurality of quality values, and each of the plurality of quality values corresponds to image quality of each region in the residual map of the feature domain.

In a possible implementation, a quality map may be obtained, and the target quality matrix is determined based on the quality map. The quality map is used to record the image quality of each region in the residual map of the feature domain.

It should be noted that the foregoing specific manner of obtaining the quality map and the target quality matrix may be any manner thought of by persons skilled in the art. This is not limited in embodiments of this application.

For example, a quality value (image quality value) of each point in the quality map and the target quality matrix may be set by a user.

For another example, an input image (or a feature map) may be analyzed based on an algorithm such as a bit rate control algorithm or a region of interest detection algorithm, to obtain the quality map or the quality matrix. A size of the input image (or the feature map) may be the same as a size of the quality map.

In a possible implementation, the input image may be a complete image, or may be a Y component and UV components of an image.

S1102: Scale a first residual map and/or first Gaussian distribution parameter information based on the target quality matrix to obtain a second residual map and/or second Gaussian distribution parameter information.

The first residual map is the residual map of the feature domain, and the first Gaussian distribution parameter information is Gaussian distribution parameter information of the residual map of the feature domain.

In a possible implementation, a target quality scaling matrix may be determined based on the target quality matrix. The target quality scaling matrix represents a scaling value of each region in the residual map of the feature domain and/or the Gaussian distribution parameter information. A target quality scaling tensor is determined based on the target quality scaling matrix. The target quality scaling tensor represents a scaling tensor of the residual map of the feature domain and/or the Gaussian distribution parameter information in three-dimensional space. The first residual map is scaled based on the target quality scaling tensor to obtain the second residual map, and/or the first Gaussian distribution parameter information is scaled based on the target quality scaling tensor to obtain the second Gaussian distribution parameter information.

For example, for a coding value in linear domain, a quality scaling value of each point in the image may be determined based on a quality value (namely, a quality level index) $Q[i, j]$ of each point in the image of the target quality matrix. A quality scaling value $Q_m[i, j]$ of any point in the target quality scaling matrix may satisfy the following:

$$Q_m[i, j] = 2^{\frac{Q[i,j]}{k}} + n,$$

that is, the quality scaling value $scale = 2^{\frac{index}{k}}$, where k is an integer, and n is a real number. For example, K may be 4, and n may be 0.

In a possible implementation, fixed-point processing may be performed on $Q_m$ to obtain $Q_{int}$.

Optionally, $Q_{int}$ may satisfy the following:

$$Q_{int} = round(Q_m * 2^{denom}) + b,$$

where

b is an integer. $2^{\frac{index}{4}}$ is used as an example. When a value range of the quality level Q[i,j] is [-8, 8], 6 bits (bits) represent $Q_m$ in a fixed-point manner, and specific values are shown in Table 1, where $Q_m = Q_{int} \gg denom$.

Table 1

| Quality value Q | -8 | -7 | -6 | -5 | -4 | -3 | -2 | -1 | 0 | 1 | 2 | 3 | 4 | 5 | 6 | 7 | 8 |
|---|---|---|---|---|---|---|---|---|---|---|---|---|---|---|---|---|---|
| $Q_{int}$ | 4 | 5 | 6 | 7 | 8 | 10 | 12 | 14 | 16 | 20 | 23 | 27 | 32 | 39 | 46 | 54 | 64 |
| denom | 4 | 4 | 4 | 4 | 4 | 4 | 4 | 4 | 4 | 4 | 4 | 4 | 4 | 4 | 4 | 4 | 4 |

For another example, for a coding value in log domain, the quality scaling value needs to be calculated, a quality scaling value $Q_{m\_log}$ of the coding value in log domain further needs to be calculated, and the quality scaling value $Q_{m\_log}$ of the coding value in log domain may satisfy the following:

$$Q_{m\_log}[i, j] = a * \log_k \left( 2^{\frac{Q[i,j]}{k}} + n \right), \text{ that is } Q_{m\_log}[i, j] = \log_k 2 * a * \left( \frac{Q[i,j]}{k} + n \right)$$

During actual application, for the coding value in log domain, when fixed-pointing is performed on $Q_{m\_log}$, fixed-pointing may be performed based on a related parameter $\log_k 2 * a$ of the log domain, and the quality scaling value $Q_{m\_log}$ on which fixed-pointing is performed may satisfy the following:

$$Q_{m\_log}[i, j] = t * Q[i, j] \gg (2 + precision)$$

For another example, for coding a three-dimensional map, a quality scaling value of each point in the image may be determined based on a (image) quality value (namely, a quality level index) Q[c, i, j] of each point in the image of the target quality matrix. A quality scaling value $Q_m[c, i, j]$ may satisfy the following:

$$Q_m[c, i, j] = 2^{\frac{Q[c,i,j]}{k}} + n, \text{ that is, the quality scaling value } scale = 2^{\frac{index}{k}}$$

For coding the three-dimensional map, the quality scaling value $Q_{m\_log}$ of the coding value in log domain further needs to be calculated, and the quality scaling value $Q_{m\_log}$ of the coding value in log domain may satisfy the following:

$$Q_{m\_log}[c, i, j] = a * \log_k \left( 2^{\frac{Q[c,i,j]}{k}} + n \right), \text{ that is } Q_{m\_log}[c, i, j] = \log_k 2 * a * \left( \frac{Q[c,i,j]}{k} + n \right)$$

During actual application, for coding the three-dimensional map, when fixed-pointing is performed on $Q_{m\_log}$, fixed-pointing may be performed based on the related parameter $\log_k 2 * a$ of the log domain, and the quality scaling value $Q_{m\_log}$ on which fixed-pointing is performed may satisfy the following:

$$Q_{m\_log}[c, i, j] = t * Q[c, i, j] \gg (2 + precision)$$

In a possible implementation, the target quality scaling tensor may be determined based on the target quality scaling matrix and a gain vector. The gain vector includes a channel-level quality adjustment gain vector and/or an image-level quality control factor.

It may be understood that, for a three-dimensional tensor C $\times$ H $\times$ W of a feature map, a two-dimensional H $\times$ W quality scaling matrix $Q_m$ may be expanded to the three-dimensional tensor based on the target quality scaling matrix (and the gain vector).

In a possible implementation, the target quality scaling tensor is determined based on the target quality scaling matrix and a gain parameter. The gain parameter includes a channel-level quality adjustment gain vector and/or an image-level quality control factor.

As shown in FIG. 12, a quality scaling map representing the target quality scaling matrix may be determined based on the quality map representing the target quality matrix. The scaling tensor (target quality scaling tensor) is determined based on the gain parameter and the quality scaling map representing the target quality scaling matrix.

For example, for the coding value in linear domain, when there are a channel-level quality adjustment gain vector $m_t$ and an image-level quality control factor $\beta_{displacement}$, a target quality scaling tensor m[c,i, j] may satisfy the following:

$$m[c, i, j] = Q_m[i, j] \cdot \ \beta_{displacement} \cdot m_t[c]$$

, or

$$m[c, i, j] = (Q_{int}[i, j] \cdot \ \beta_{displacement} \gg denom) \cdot m_t[c]$$

, or

$$m[c, i, j] = (Q_{int}[i, j] \cdot \ \beta_{displacement} \cdot m_t[c]) \gg denom$$

For the coding value in log domain, when there are the channel-level quality adjustment gain vector $m_t$ and the image-level quality control factor $\beta_{displacement}$, the target quality scaling tensor m[c,i,j] may satisfy the following:

$$m[c, i, j] = Q_m[i, j] \cdot \ \beta_{displacement} \cdot m_t[c]$$

, or

$$m[c, i, j] = (Q_{int}[i, j] \cdot \ \beta_{displacement} \gg denom) \cdot m_t[c]$$

, or

$$m[c, i, j] = (Q_{int}[i, j] \cdot \ \beta_{displacement} \cdot m_t[c]) \gg denom$$

For the coding value in log domain, a target quality scaling tensor m_log of the logarithm domain further needs to be calculated, and the target quality scaling tensor m_log of the logarithm domain may satisfy the following:

$$m\_log[c, i, j] = Q_m\_log[i, j] + \ \beta_{displacement\_log} + m_{t\_log}[c]$$

For coding the three-dimensional map, when there are the channel-level quality adjustment gain vector $m_t$ and the image-level quality control factor $\beta_{displacement}$, the target quality scaling tensor m[c, i, j] may satisfy the following:

$$m[c, i, j] = Q_m[c, i, j] \cdot \ \beta_{displacement} \cdot m_t[c]$$

, or

$$m[c, i, j] = (Q_{int}[c, i, j] \cdot \ \beta_{displacement} \gg denom) \cdot m_t[c]$$

, or

$$m[c, i, j] = (Q_{int}[c, i, j] \cdot \ \beta_{displacement} \cdot m_t[c]) \gg denom$$

For coding the three-dimensional map, the target quality scaling tensor m_log of the logarithm domain further needs to be calculated, and the target quality scaling tensor m_log of the logarithm domain may satisfy the following:

$$m\_log[c, i, j] = Q_m\_log[c, i, j] + \beta_{displacement\_log} + m_{t\_log}[c]$$

For another example, for the coding value in linear domain, when there is the frame-level quality control factor $\beta_{displacement}$, the target quality scaling tensor m[c, i,j] may satisfy the following:

$$m[c, i, j] = Q_m[i, j] \cdot \beta_{displacement}$$

, or

$$m[c, i, j] = (Q_{int}[c, i, j] \gg denom) \cdot \beta_{displacement}$$

, or

$$m[c, i, j] = (Q_{int}[c, i, j] \cdot \beta_{displacement}) \gg denom$$

For the coding value in log domain, when there is the frame-level quality control factor $\beta_{displacement}$, the target quality scaling tensor m[c, i, j] may satisfy the following:

$$m[c, i, j] = Q_m[i, j] \cdot \beta_{displacement}$$

, or

$$m[c, i, j] = (Q_{int}[i, j] \gg denom) \cdot \beta_{displacement}$$

, or

$$m[c, i, j] = (Q_{int}[i, j] \cdot \beta_{displacement}) \gg denom$$

For the coding value in log domain, the target quality scaling tensor m_log of the logarithm domain further needs to be calculated, and the target quality scaling tensor m_log of the logarithm domain may satisfy the following:

$$m\_log[c, i, j] = Q_m\_log[i, j] + \beta_{displacement\_log}$$

For coding the three-dimensional map, when there is the frame-level quality control factor $\beta_{displacement}$, the target quality scaling tensor m[c,i,j] may satisfy the following:

$$m[c, i, j] = Q_m[c, i, j] \cdot \beta_{displacement}$$

, or

$$m[c, i, j] = (Q_{int}[c, i, j] \gg denom) \cdot \beta_{displacement}$$

, or

$$m[c, i, j] = (Q_{int}[c, i, j] \cdot \beta_{displacement}) \gg denom$$

For coding the three-dimensional map, the target quality scaling tensor m_log of the logarithm domain further needs to be calculated, and the target quality scaling tensor m_log of the logarithm domain may satisfy the following:

$$\mathrm{m\_log}[c, i, j] = Q_{\mathrm{m\_log}}[c, i, j] + \ \beta_{\mathrm{displacement\_log}}$$

In another possible implementation, the target quality scaling tensor may be determined based on the target quality scaling matrix.

For example, for the coding value in linear domain, when there is no other quality control factor (gain parameter), the target quality scaling tensor m[c, i,j] may satisfy the following:

$$\mathrm{m}[c, i, j] = Q_{\mathrm{m}}[i, j]$$

, or

$$\mathrm{m}[c, i, j] = Q_{\mathrm{int}}[i, j] \gg \mathrm{denom}$$

For the coding value in log domain, when there is no other quality control factor (gain parameter), the target quality scaling tensor m[c, i,j] may satisfy the following:

$$\mathrm{m}[c, i, j] = Q_{\mathrm{m}}[i, j]$$

, or

$$\mathrm{m}[c, i, j] = Q_{\mathrm{int}}[i, j] \gg \mathrm{denom}$$

For the coding value in log domain, the target quality scaling tensor m_log of the logarithm domain further needs to be calculated, and the target quality scaling tensor m_log of the logarithm domain may satisfy the following:

$$\mathrm{m\_log}[c, i, j] = Q_{\mathrm{m\_log}}[i, j]$$

For coding the three-dimensional map, when there is no other quality control factor (gain parameter), the target quality scaling tensor m[c, i, j] may satisfy the following:

$$\mathrm{m}[c, i, j] = Q_{\mathrm{m}}[c, i, j]$$

, or

$$\mathrm{m}[c, i, j] = Q_{\mathrm{int}}[c, i, j] \gg \mathrm{denom}$$

For coding the three-dimensional map, the target quality scaling tensor m_log of the logarithm domain further needs to be calculated, and the target quality scaling tensor m_log of the logarithm domain may satisfy the following:

$$\mathrm{m\_log}[c, i, j] = Q_{\mathrm{m\_log}}[c, i, j]$$

In a possible implementation, for the coding value in linear domain, the second residual map r'[c, i, j] may satisfy the following:

$$\mathrm{r}'[c, i, j] = (\mathrm{m}[c, i, j] \cdot \mathrm{r}[c, i, j]) \gg (\mathrm{Precision}),$$

where
r[c, i, j] is the first residual map, and Precision may be any non-negative number. For example, Precision may be a non-negative number such as 0, 1, or 13.

In a possible implementation, for the coding value in linear domain, the second Gaussian distribution parameter information (second sigma) σ' may satisfy the following:

$$\sigma'[c, i, j] = (\mathrm{m}[c, i, j] \cdot \sigma[c, i, j]) \ \gg (\mathrm{Precision2}),$$

where

$\sigma$ is the first Gaussian distribution parameter information (first sigma), and Precision2 may be any non-negative number. For example, Precision2 may be a non-negative number such as 0, 1, or 13.

In a possible implementation, for the coding value in log domain, the second residual map r' [c, i, j] may satisfy the following:

$$r'[c, i, j] = (m[c, i, j] \cdot r[c, i, j]) \gg (\text{Precision})$$

In a possible implementation, for the coding value in log domain, the second Gaussian distribution parameter information (second sigma) $\sigma'$ may satisfy the following:

$$\sigma' \ [c, i, j] = m_{\log}[c, i, j] + \sigma[c, i, j] \ - \text{Precision2\_log}$$

S1103: Generate a bitstream based on the target quality matrix, the second residual map, and/or the second Gaussian distribution parameter information.

In a possible implementation, the target quality matrix and the second residual map may be encoded to generate the bitstream. The second residual map is encoded based on the second Gaussian distribution parameter information.

In a possible implementation, the target quality matrix or a target quality residual matrix of the target quality matrix may be encoded to generate the bitstream. The target quality residual matrix represents a residual value of each piece of image quality of the target quality matrix.

In a possible implementation, the target quality residual matrix of the target quality matrix may be generated based on the target quality matrix.

It should be noted that a specific manner of generating the target quality residual matrix of the target quality matrix based on the target quality matrix may be any manner thought of by persons skilled in the art. This is not limited in embodiments of this application.

For example, a prediction matrix of the target quality matrix may be determined based on the target quality matrix, and the target quality residual matrix is determined based on the prediction matrix of the target quality matrix. For a prediction value of any point in the prediction matrix of the target quality matrix, the prediction value of the point may be calculated based on a left adjacent point and an upper adjacent point that are of a quality quantity corresponding to a prediction quantity of the point in the target quality matrix. When only the upper adjacent point exists, the prediction value of the point may be calculated based only on the upper adjacent point of the point. When only the left adjacent point exists, the prediction value of the point may be calculated based only on the left adjacent point of the point. When only the left adjacent point and the upper adjacent point do not exist, it may be determined that the prediction value of the point is 0.

For example, the prediction value Q_pred[i, j] of any point in the target quality prediction matrix may satisfy the following:

$$Q\_pred[i, j] = (Q[i, j - 1] + Q[i - 1, j])/2$$

For example, a residual value $Q_{res}[i, j]$ of any point in the target quality residual matrix may satisfy the following:

$$Q_{res}[i, j] = Q[i, j] - Q\_pred[i, j]$$

During actual application, a value range of the residual value of the target quality residual matrix may be N times a value range of the quality value of the target quality matrix. N is a positive number. For example, the value range of the residual value of the target quality residual matrix is twice the value range of the quality value of the target quality matrix. If the value range of the quality value of the target quality matrix is [-8, 8], the value range of the residual value of the target quality residual matrix may be [-16, 16].

In a possible implementation, a Gaussian distribution parameter of the target quality residual matrix may be determined. A probability distribution of the target quality residual matrix is determined based on the Gaussian distribution parameter. The Gaussian distribution parameter is written into the bitstream. Entropy encoding is performed on the target quality residual matrix based on the probability distribution.

For example, the Gaussian distribution parameter of the target quality residual matrix may be determined. A probability distribution table of the target quality residual matrix is determined based on the Gaussian distribution parameter; the Gaussian distribution parameter is written into the bitstream; and entropy encoding (for example, metANS entropy encoding) is performed on the target quality residual matrix based on the probability distribution table.

Optionally, an index number of the Gaussian distribution parameter may alternatively be written into the bitstream.

As shown in Table 2, if the Gaussian distribution parameter is a probability distribution of 0.2, the index number 0 of the Gaussian distribution parameter may be written into the bitstream.

Table 2

| Index number | 0 | 1 | 2 | 3 | 4 | 5 | 6 | 7 |
|---|---|---|---|---|---|---|---|---|
| Gaussian distribution parameter | 0.2 | 0.25 | 0.3 | 0.4 | 0.5 | 0.8 | 1.6 | 4 |

In another possible implementation, a target probability distribution may be determined from a plurality of candidate probability distributions based on the target quality residual matrix. An index number of the target probability distribution is written into the bitstream. Entropy encoding is performed on the target quality residual matrix based on the target probability distribution.

For example, a probability distribution having a high similarity to a probability distribution of the residual value may be determined, through matching, from the plurality of preset candidate probability distributions based on the probability distribution of the residual value of the target quality residual matrix. The index number of the target probability distribution is written into the bitstream, and me-tANS entropy encoding is performed on the residual matrix based on the probability distribution obtained through matching.

Optionally, the target probability distribution may alternatively be written into the bitstream.

In still another possible implementation, a Gaussian distribution parameter of the target quality matrix may be determined. A probability distribution of the target quality matrix is determined based on the Gaussian distribution parameter. The Gaussian distribution parameter is written into the bitstream. Entropy encoding is performed on the target quality matrix based on the probability distribution.

Optionally, an index number of the Gaussian distribution parameter may alternatively be written into the bitstream.

In still another possible implementation, a target probability distribution is determined from a plurality of candidate probability distributions based on the target quality matrix. An index number of the target probability distribution is written into the bitstream. Entropy encoding is performed on the target quality matrix based on the target probability distribution.

Optionally, the target probability distribution may alternatively be written into the bitstream.

In a possible implementation, the encoding method provided in this embodiment of this application may further include: inputting the image into an encoder network to obtain a first feature map; inputting the first feature map into a context network to obtain a first prediction map; determining the first residual map based on the first feature map and the first prediction map; inputting the first feature map into a hyper encoder network to obtain first hyperprior information; quantizing the first hyperprior information to obtain second hyperprior information; and inputting the second hyperprior information into a hyper scale decoder network to obtain the first Gaussian distribution parameter information.

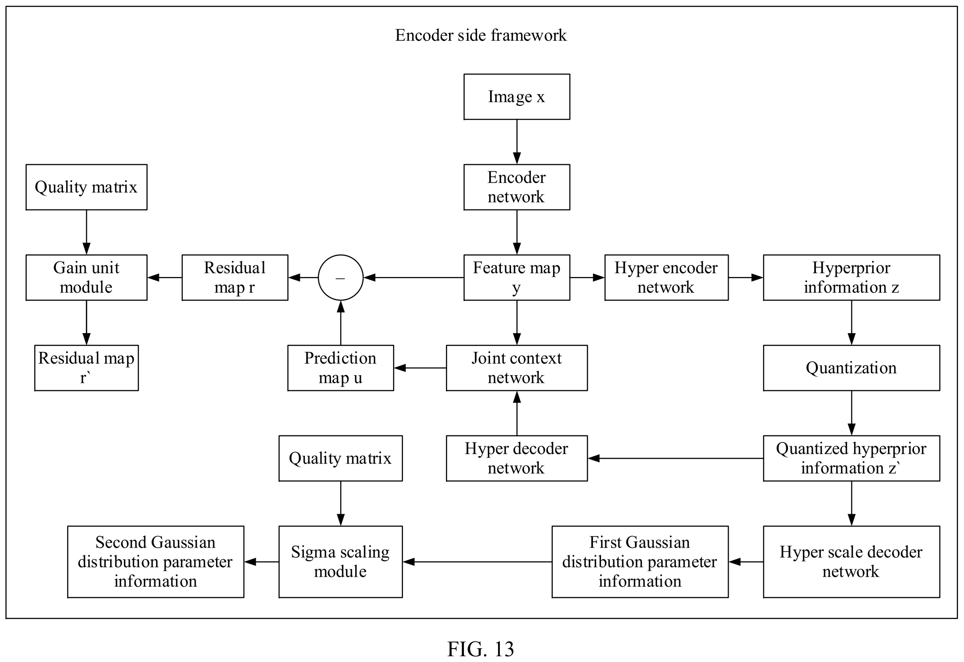

FIG. 13 shows an encoder side architecture according to an embodiment of this application. The following describes the foregoing encoding method based on the encoder side architecture.

As shown in FIG. 13, an image x is input into an input encoder network (analysis transform) of an encoder side to obtain a feature map y (that is, the foregoing first feature map). The image x may be a complete image, or may be a Y component or UV components of a YUV image.

The obtained feature map y is input into a hyper encoder (hyper encoder) network to obtain hyperprior information z (that is, the foregoing first hyperprior information). me-tANS entropy encoding is performed on quantized z, and encoded z is written into a bitstream.

The obtained hyperprior information z is quantized to obtain quantized hyperprior information z' (that is, the foregoing second hyperprior information). FIG. 13 does not show that entropy encoding (me-tANS) may be further performed on the quantized hyperprior information z', and encoded z' is written into the bitstream.

The quantized hyperprior information z' is input into a hyper scale decoder (hyper scale decoder) network to obtain Gaussian distribution parameter information $\sigma$ (that is, the foregoing first Gaussian distribution parameter information).

The quantized hyperprior information z' is input into a hyper decoder (hyper decoder) network.

The Gaussian distribution parameter information $\sigma$ is input into a sigma scaling (sigma scaling) module for scaling based on a quality matrix $Q_m$ (that is, the foregoing target quality matrix), to obtain Gaussian distribution parameter information $\sigma'$ (that is, the foregoing second Gaussian distribution parameter information).

The obtained feature map y is input into a joint context network (MSM) to obtain a prediction map u (that is, the foregoing first prediction map) of the feature map y.

A residual map r (that is, the foregoing first residual map) may be obtained by calculating a residual map based on the feature map y and the prediction map u.

The obtained residual map r is input into a gain unit (gain unit) module and scaled based on the quality matrix $Q_m$ (that is, the foregoing target quality matrix), to obtain a residual map r' (that is, the foregoing second residual map).

Optionally, the encoder side architecture may be a JPEG AI encoder side architecture.

It can be learned that, in this embodiment of this application, the gain unit (gain unit) module and/or the sigma scaling (sigma scaling) module of the encoder side architecture are/is improved, so that the JPEG AI encoder side architecture supports bit rate adjustment in spatial domain.

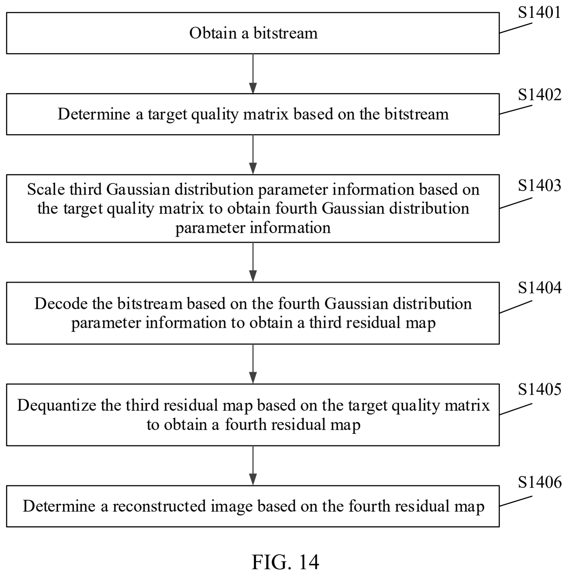

FIG. 14 shows a decoding method according to an embodiment of this application. As shown in FIG. 14, the decoding method may include the following steps.

S1401: Obtain a bitstream.

A target quality matrix represents image quality of each region in a residual map of a feature domain.

S1402: Determine the target quality matrix based on the bitstream.

The target quality matrix represents the image quality of each region in the residual map of the feature domain.

In a possible implementation, the bitstream may be decoded to obtain a Gaussian distribution parameter of a target quality residual matrix of the target quality matrix. A probability distribution of the target quality residual matrix is determined based on the Gaussian distribution parameter. The bitstream is decoded based on the probability distribution to obtain the target quality residual matrix. The target quality matrix is determined based on the target quality residual matrix.

Optionally, the bitstream may alternatively be decoded to obtain an index number of the Gaussian distribution parameter of the target quality residual matrix of the target quality matrix. For example, if the index number of the Gaussian distribution parameter is 0, a probability distribution whose Gaussian distribution parameter is 0.2 may be determined according to Table 2.

In another possible implementation, the bitstream may be decoded to obtain a Gaussian distribution parameter of the target quality matrix. A probability distribution of the target quality matrix is determined based on the Gaussian distribution parameter. The bitstream is decoded based on the probability distribution to obtain the target quality matrix.

In still another possible implementation, the bitstream may be decoded to obtain an index number of a target probability distribution. The target probability distribution is determined from a plurality of candidate probability distributions based on the target quality residual matrix of the target quality matrix. The bitstream is decoded based on the target probability distribution to obtain the target quality residual matrix. The target quality matrix is determined based on the target quality residual matrix.

In still another possible implementation, the bitstream may be decoded to obtain an index number of a target probability distribution. The target probability distribution is determined from a plurality of candidate probability distributions based on the target quality matrix. The bitstream is decoded based on the target probability distribution to obtain the target quality matrix.

In a possible implementation, a target quality prediction matrix of the target quality matrix may be determined based on the target quality residual matrix, and the target quality matrix may be determined based on the target quality residual matrix and the target quality prediction matrix.

It should be noted that a specific manner of determining the target quality prediction matrix of the target quality matrix may be any manner thought of by persons skilled in the art. This is not limited in embodiments of this application.

For example, a prediction matrix of the target quality matrix may be determined based on the target quality matrix, and the target quality residual matrix is determined based on the prediction matrix of the target quality matrix. For a prediction value of any point in the prediction matrix of the target quality matrix, the prediction value of the point may be calculated based on a left adjacent point and an upper adjacent point that are of a quality quantity corresponding to a prediction quantity of the point in the target quality matrix. When only the upper adjacent point exists, the prediction value of the point may be calculated based only on the upper adjacent point of the point. When only the left adjacent point exists, the prediction value of the point may be calculated based only on the left adjacent point of the point. When only the left adjacent point and the upper adjacent point do not exist, it may be determined that the prediction value of the point is 0.

For example, the prediction value Q_pred[i, j] of any point in the target quality prediction matrix may satisfy the following:

$$Q\_pred[i, j] = (Q[i, j-1] + Q[i-1, j])/2$$

For example, a quality value Q[i, j] of any point in the target quality matrix may satisfy the following:

$$Q[i, j] = Q_{res}[i, j] + Q\_pred[i, j]$$

S1403: Scale third Gaussian distribution parameter information based on the target quality matrix to obtain fourth Gaussian distribution parameter information.

The third Gaussian distribution parameter information is Gaussian distribution parameter information of the residual map of the feature domain.

In a possible implementation, a target quality scaling matrix may be determined based on the target quality matrix. A target quality scaling tensor is determined based on the target quality scaling matrix. The third Gaussian distribution parameter information is scaled based on the target quality scaling tensor to obtain the fourth Gaussian distribution parameter information. The target quality scaling matrix represents a scaling value of each region in the residual map of the feature domain and the Gaussian distribution parameter information. The target quality scaling tensor represents scaling tensors of the residual map of the feature domain and the Gaussian distribution parameter information in three-dimensional space.

It should be noted that, for a specific implementation of determining the target quality scaling matrix based on the target quality matrix, refer to the description of determining the target quality scaling matrix based on the target quality matrix in S1402. Details are not described herein again.

It may be understood that, for a three-dimensional tensor $C \times H \times W$ of a feature map, a two-dimensional $H \times W$ quality scaling matrix $Q_m$ may be expanded to the three-dimensional tensor based on the target quality scaling matrix (and a gain vector).

In a possible implementation, the target quality scaling tensor is determined based on the target quality scaling matrix and a gain parameter. The gain parameter includes a channel-level quality adjustment gain vector and/or an image-level quality control factor.

For example, for a coding value in linear domain, when there are a channel-level quality adjustment gain vector $m_t$ and an image-level quality control factor $\beta_{displacement}$, a target quality scaling tensor $m[c, i, j]$ may satisfy the following:

$$m[c, i, j] = Q_m[i, j] \cdot \beta_{displacement} \cdot m_t[c]$$

, or

$$m[c, i, j] = (Q_{int}[i, j] \cdot \beta_{displacement} \gg denom) \cdot m_t[c]$$

, or

$$m[c, i, j] = (Q_{int}[i, j] \cdot \beta_{displacement} \cdot m_t[c]) \gg denom$$

For a coding value in log domain, when there are the channel-level quality adjustment gain vector $m_t$ and the image-level quality control factor $\beta_{displacement}$, the target quality scaling tensor $m[c,i,j]$ may satisfy the following:

$$m[c, i, j] = Q_m[i, j] \cdot \beta_{displacement} \cdot m_t[c]$$

, or

$$m[c, i, j] = (Q_{int}[i, j] \cdot \beta_{displacement} \gg denom) \cdot m_t[c]$$

, or

$$m[c, i, j] = (Q_{int}[i, j] \cdot \beta_{displacement} \cdot m_t[c]) \gg denom$$

For the coding value in log domain, a target quality scaling tensor m_log of the logarithm domain further needs to be calculated, and the target quality scaling tensor m_log of the logarithm domain may satisfy the following:

$$m\_log[c, i, j] = Q_m\_log[i, j] + \beta_{displacement\_log} + m_{t\_log}[c]$$

For coding a three-dimensional map, when there are the channel-level quality adjustment gain vector $m_t$ and the image-level quality control factor $\beta_{displacement}$, the target quality scaling tensor $m[c,i, j]$ may satisfy the following:

$$m[c, i, j] = Q_m[c, i, j] \cdot \beta_{displacement} \cdot m_t[c]$$

, or

$$m[c, i, j] = (Q_{int}[c, i, j] \cdot \beta_{displacement} \gg denom) \cdot m_t[c]$$

, or

$$m[c, i, j] = (Q_{int}[c, i, j] \cdot \beta_{displacement} \cdot m_t[c]) \gg denom$$

For coding the three-dimensional map, the target quality scaling tensor m_log of the logarithm domain further needs to be calculated, and the target quality scaling tensor m_log of the logarithm domain may satisfy the following:

$$m\_log[c, i, j] = Q_{m}\_log[c, i, j] + \beta_{displacement\_log} + m_{t\_log}[c]$$

For another example, for the coding value in linear domain, when there is the frame-level quality control factor $\beta_{displacement}$, the target quality scaling tensor m[c, i,j] may satisfy the following:

$$m[c, i, j] = Q_m[i, j] \cdot \beta_{displacement}$$

, or

$$m[c, i, j] = (Q_{int}[c, i, j] \gg denom) \cdot \beta_{displacement}$$

, or

$$m[c, i, j] = (Q_{int}[c, i, j] \cdot \beta_{displacement}) \gg denom$$

For the coding value in log domain, when there is the frame-level quality control factor $\beta_{displacement}$, the target quality scaling tensor m[c,i,j] may satisfy the following:

$$m[c, i, j] = Q_m[i, j] \cdot \beta_{displacement}$$

, or

$$m[c, i, j] = (Q_{int}[i, j] \gg denom) \cdot \beta_{displacement}$$

, or

$$m[c, i, j] = (Q_{int}[i, j] \cdot \beta_{displacement}) \gg denom$$

For the coding value in log domain, the target quality scaling tensor m_log of the logarithm domain further needs to be calculated, and the target quality scaling tensor m_log of the logarithm domain may satisfy the following:

$$m\_log[c, i, j] = Q_{m}\_log[i, j] + \beta_{displacement\_log}$$

For coding the three-dimensional map, when there is the frame-level quality control factor $\beta_{displacement}$, the target quality scaling tensor m[c,i,j] may satisfy the following:

$$m[c, i, j] = Q_m[c, i, j] \cdot \beta_{displacement}$$

, or

$$m[c, i, j] = (Q_{int}[c, i, j] \gg denom) \cdot \beta_{displacement}$$

, or

$$m[c, i, j] = (Q_{int}[c, i, j] \cdot \beta_{displacement}) \gg denom$$

For coding the three-dimensional map, the target quality scaling tensor m_log of the logarithm domain further needs to be calculated, and the target quality scaling tensor m_log of the logarithm domain may satisfy the following:

$$m\_log[c, i, j] = Q_{m\_log}[c, i, j] + \beta_{displacement\_log}$$

In another possible implementation, the target quality scaling tensor may be determined based on the target quality scaling matrix.

For example, for the coding value in linear domain, when there is no other quality control factor (gain parameter), the target quality scaling tensor m[c, i,j] may satisfy the following:

$$m[c, i, j] = Q_m[i, j]$$

, or

$$m[c, i, j] = Q_{int}[i, j] \gg denom$$

For the coding value in log domain, when there is no other quality control factor (gain parameter), the target quality scaling tensor m [c, i,j] may satisfy the following:

$$m[c, i, j] = Q_m[i, j]$$

, or

$$m[c, i, j] = Q_{int}[i, j] \gg denom$$

For the coding value in log domain, the target quality scaling tensor m_log of the logarithm domain further needs to be calculated, and the target quality scaling tensor m_log of the logarithm domain may satisfy the following:

$$m\_log[c, i, j] = Q_{m\_log}[i, j]$$

For coding the three-dimensional map, when there is no other quality control factor (gain parameter), the target quality scaling tensor m[c,i,j] may satisfy the following:

$$m[c, i, j] = Q_m[c, i, j]$$

, or

$$m[c, i, j] = Q_{int}[c, i, j] \gg denom$$

For coding the three-dimensional map, the target quality scaling tensor m_log of the logarithm domain further needs to be calculated, and the target quality scaling tensor m_log of the logarithm domain may satisfy the following:

$$m\_log[c, i, j] = Q_{m\_log}[c, i, j]$$

In a possible implementation, for the coding value in linear domain, the fourth Gaussian distribution parameter information (fourth sigma) σ' may satisfy the following:

$$\sigma' [c, i, j] = (m[c, i, j] \cdot \sigma[c, i, j]) \gg (Precision2), where$$

σ is the third Gaussian distribution parameter information (third sigma), and Precision2 may be any non-negative number. For example, Precision2 may be a non-negative number such as 0, 1, or 13.

In a possible implementation, for the coding value in log domain and coding the three-dimensional map, the fourth Gaussian distribution parameter information σ' may satisfy the following:

$$\sigma'[c, i, j] = m_{\log[c,i,j]} + \sigma[c, i, j] - \text{Precision2\_log, where}$$

$\sigma$ is the third Gaussian distribution parameter information, and Precision2 may be any non-negative number. For example, Precision2 may be a non-negative number such as 0, 1, or 13.

S1404: Decode the bitstream based on the fourth Gaussian distribution parameter information to obtain a third residual map.

The third residual map is the residual map of the feature domain.

S1405: Dequantize the third residual map based on the target quality matrix to obtain a fourth residual map.

In a possible implementation, in a possible implementation, the target quality scaling matrix may be determined based on the target quality matrix. A target quality inverse scaling tensor is determined based on the target quality scaling matrix. The third residual map is dequantized based on the target quality inverse scaling tensor to obtain the fourth residual map.

In a possible implementation, the target quality inverse scaling tensor is determined based on the target quality scaling matrix and the gain parameter. The gain parameter includes the channel-level quality adjustment gain vector and/or the image-level quality control factor.

For example, when there are the channel-level quality adjustment gain vector $m_t$ and the image-level quality control factor $\beta_{\text{displacement}}$, the target quality inverse scaling tensor $m^{-1}[c, i, j]$ may satisfy the following:

$$m^{-1}[c, i, j] = Q_m{}^{-1}[i, j] \cdot 1/\beta_{\text{displacement}} \cdot m^{-1}{}_t[c]$$

, or

$$m^{-1}[c, i, j] = (Q_{\text{int}}{}^{-1}[i, j] \cdot 1/\beta_{\text{displacement}}) \ll \text{denom} \cdot m^{-1}{}_t[c]$$

, or

$$m^{-1}[c, i, j] = (Q_{\text{int}}{}^{-1}[i, j] \cdot 1/\beta_{\text{displacement}} \cdot m^{-1}{}_t[c]) \ll \text{denom}$$

For another example, when there is the frame-level quality control factor $\beta_{\text{displacement}}$, the target quality inverse scaling tensor $m^{-1}[c, i, j]$ may satisfy the following:

$$m^{-1}[c, i, j] = Q_m{}^{-1}[i, j] \cdot 1/\beta_{\text{displacement}}$$

, or

$$m^{-1}[c, i, j] = (Q_{\text{int}}{}^{-1}[i, j] \cdot 1/\beta_{\text{displacement}}) \ll \text{denom}$$

, or

$$m^{-1}[c, i, j] = (Q_{\text{int}}{}^{-1}[i, j] \ll \text{denom}) \cdot 1/\beta_{\text{displacement}}$$

In another possible implementation, the target quality inverse scaling tensor may be determined based on the target quality scaling matrix.

For example, when there is no other quality control factor (gain parameter), the target quality inverse scaling tensor $m^{-1}[c, i, j]$ may satisfy the following:

$$m^{-1}[c, i, j] = Q_m{}^{-1}[i, j]$$

, or

$$m^{-1}[c, i, j] = Q_{\text{int}}{}^{-1}[i, j] \ll \text{denom}$$

In a possible implementation, the fourth residual map $r'[c, i, j]$ may satisfy the following:

$$r'[c, i, j] = (m^{-1}[c, i, j] \cdot r[c, i, j]) \ll (Precision),$$

where

r[c, i, j] is the third residual map, and Precision may be any non-negative number. For example, Precision may be a non-negative number such as 0, 1, or 13.

S1406: Determine a reconstructed image based on the fourth residual map.

For example, the fourth residual map may be input into a decoder network (synthesis transform) to obtain the reconstructed image. The reconstructed image may be a complete image, or may be a Y component or UV components of a YUV image.

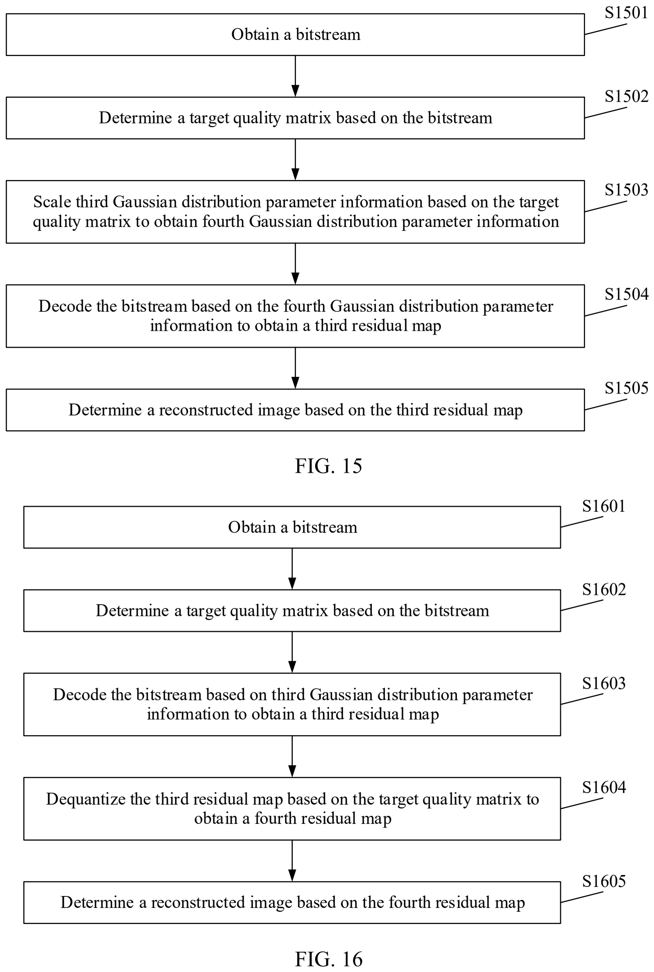

FIG. 15 shows another decoding method according to an embodiment of this application. As shown in FIG. 15, the decoding method may include the following steps.

S1501: Obtain a bitstream.

S1502: Determine a target quality matrix based on the bitstream.

The target quality matrix represents image quality of each region in a residual map of a feature domain.

S1503: Scale third Gaussian distribution parameter information based on the target quality matrix to obtain fourth Gaussian distribution parameter information.

The third Gaussian distribution parameter information is Gaussian distribution parameter information of the residual map of the feature domain.

S1504: Decode the bitstream based on the fourth Gaussian distribution parameter information to obtain a third residual map.

The third residual map is the residual map of the feature domain.

S1505: Determine a reconstructed image based on the third residual map.

FIG. 16 shows still another decoding method according to an embodiment of this application. As shown in FIG. 16, the decoding method may include the following steps.

S1601: Obtain a bitstream.

S1602: Determine a target quality matrix based on the bitstream.

The target quality matrix represents image quality of each region in a residual map of a feature domain.

S1603: Decode the bitstream based on third Gaussian distribution parameter information to obtain a third residual map.

The third Gaussian distribution parameter information is Gaussian distribution parameter information of the residual map of the feature domain, and the third residual map is the residual map of the feature domain.

S1604: Dequantize the third residual map based on the target quality matrix to obtain a fourth residual map.

S1605: Determine a reconstructed image based on the fourth residual map.

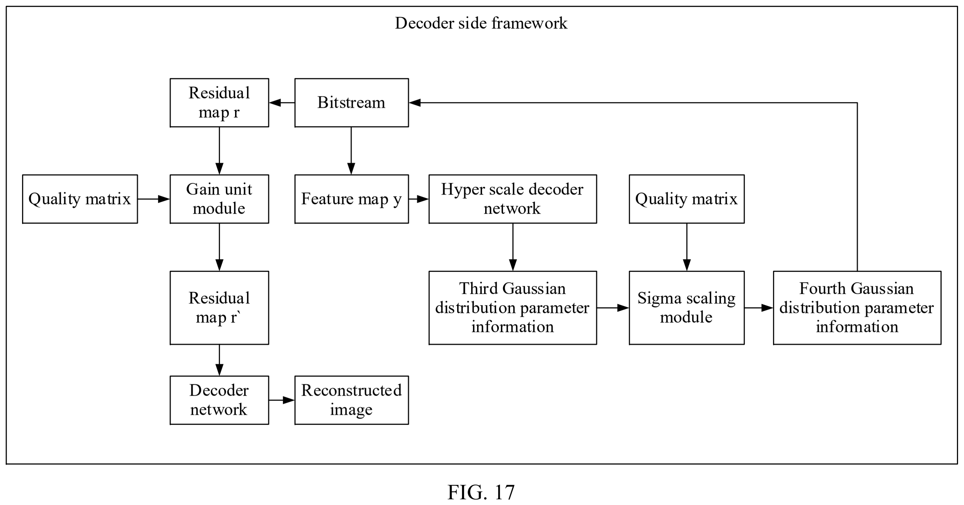

FIG. 17 shows a decoder side architecture according to an embodiment of this application. The following describes the foregoing encoding method based on the encoder side architecture.

As shown in FIG. 17, a feature map y may be obtained by decoding a bitstream input into a decoder side.

The obtained feature map y is input into a hyper scale decoder (hyper scale decoder) network to obtain Gaussian distribution parameter information (that is, the foregoing third Gaussian distribution parameter information).

The obtained Gaussian distribution parameter information is input into a sigma scaling (sigma scaling) module for scaling based on a quality matrix $Q_m$ (that is, the foregoing target quality matrix), to obtain scaled Gaussian distribution parameter information (that is, the foregoing fourth Gaussian distribution parameter information).

The residual map (that is, the foregoing third residual map) may be obtained by decoding the bitstream input into the decoder side based on the scaled Gaussian distribution parameter information.

The obtained residual map is input into an inverse gain unit (inv gain unit) module, and after the residual map is scaled and dequantized, a dequantized residual map (that is, the foregoing fourth residual map) may be obtained.

The fourth residual map may be input into a decoder network (synthesis transform) to obtain the reconstructed image. The reconstructed image may be a complete image, or may be a Y component or UV components of a YUV image.

Optionally, the decoder side architecture may be a JPEG AI decoder side architecture.

It can be learned that, in this embodiment of this application, the inverse gain unit (inv gain unit) module and/or the sigma scaling (sigma scaling) module of the decoder side architecture are/is improved, so that the JPEG AI decoder side architecture supports bit rate adjustment in spatial domain.

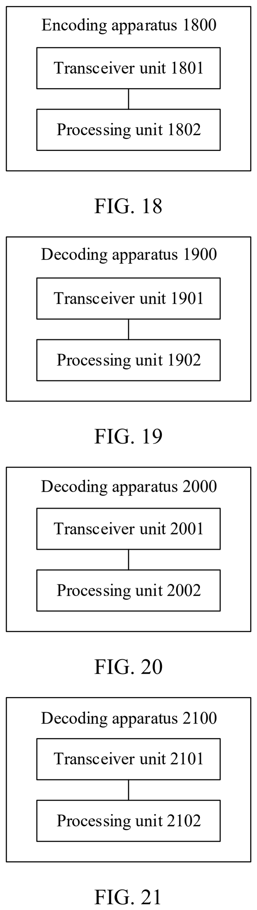

The following describes, with reference to FIG. 18, an encoding apparatus configured to perform the foregoing encoding method.

It may be understood that, to implement the foregoing function, the encoding apparatus includes a corresponding hardware and/or software module for performing the function. With reference to the example algorithm steps described in embodiments disclosed in this specification, embodiments of this application can be implemented in a form of hardware or a combination of hardware and computer software. Whether a function is performed by hardware or hardware driven by computer software depends on particular applications and design constraint conditions of the technical solutions. Persons skilled in the art may use different methods to implement the described functions for each particular application with reference to embodiments, but it should not be considered that the implementation goes beyond the scope of embodiments of this application.

In embodiments of this application, the encoding apparatus may be divided into function modules based on the foregoing method examples. For example, each function module may be obtained through division based on each corresponding function, or two or more functions may be integrated into one processing module. The integrated module may be implemented in a form of hardware. It should be noted that module division in embodiments is an example and is merely logical function division. During actual implementation, there may be another division manner.

When each function module is obtained through division based on each corresponding function, FIG. 18 is a possible composition diagram of an encoding apparatus in the foregoing embodiments. As shown in FIG. 18, the encoding apparatus 1800 may include a transceiver unit 1801 and a processing unit 1802.

The transceiver unit 1801 is configured to obtain a target quality matrix. The target quality matrix represents image quality of each region in a residual map of a feature domain.

The processing unit 1802 is configured to scale a first residual map and/or first Gaussian distribution parameter information based on the target quality matrix to obtain a second residual map and/or second Gaussian distribution parameter information. The first residual map is the residual map of the feature domain, and the first Gaussian distribution parameter information is Gaussian distribution parameter information of the residual map of the feature domain.

The processing unit 1802 is further configured to generate a bitstream based on the target quality matrix, the second residual map, and/or the second Gaussian distribution parameter information.

In a possible implementation, the processing unit 1802 is specifically configured to: determine a target quality scaling matrix based on the target quality matrix, where the target quality scaling matrix represents a scaling value of each region in the residual map of the feature domain and/or the Gaussian distribution parameter information; determine a target quality scaling tensor based on the target quality scaling matrix, where the target quality scaling tensor represents a scaling tensor of the residual map of the feature domain and/or the Gaussian distribution parameter information in three-dimensional space; and scale the first residual map based on the target quality scaling tensor to obtain the second residual map, and/or scale the first Gaussian distribution parameter information based on the target quality scaling tensor to obtain the second Gaussian distribution parameter information.

In a possible implementation, the processing unit 1802 is specifically configured to determine the target quality scaling tensor based on the target quality scaling matrix and a gain parameter. The gain parameter includes a channel-level quality adjustment gain vector and/or an image-level quality control factor.

In a possible implementation, the processing unit 1802 is specifically configured to encode the target quality matrix and the second residual map to generate the bitstream. The second residual map is encoded based on the second Gaussian distribution parameter information.

In a possible implementation, the processing unit 1802 is specifically configured to encode the target quality matrix or a target quality residual matrix of the target quality matrix to generate the bitstream.

In a possible implementation, the processing unit 1802 is further configured to generate the target quality residual matrix of the target quality matrix based on the target quality matrix. The target quality residual matrix represents a residual value of each piece of image quality of the target quality matrix.

In a possible implementation, the processing unit 1802 is specifically configured to: determine a Gaussian distribution parameter of the target quality residual matrix; determine a probability distribution of the target quality residual matrix based on the Gaussian distribution parameter; write the Gaussian distribution parameter into the bitstream; and perform entropy encoding on the target quality residual matrix based on the probability distribution.

In a possible implementation, the processing unit 1802 is specifically configured to: determine a Gaussian distribution parameter of the target quality matrix; determine a probability distribution of the target quality matrix based on the Gaussian distribution parameter; write the Gaussian distribution parameter into the bitstream; and perform entropy encoding on the target quality matrix based on the probability distribution.

In a possible implementation, the processing unit 1802 is specifically configured to: determine a target probability distribution from a plurality of candidate probability distributions based on the target quality residual matrix; write an index number of the target probability distribution into the bitstream; and perform entropy encoding on the target quality residual matrix based on the target probability distribution.

In a possible implementation, the processing unit 1802 is specifically configured to: determine a target probability distribution from a plurality of candidate probability distributions based on the target quality matrix; write an index number of the target probability distribution into the bitstream; and perform entropy encoding on the target quality matrix based on the target probability distribution.

In a possible implementation, the obtaining unit 1801 is specifically configured to: obtain a quality map, where the quality map is used to record the image quality of each region in the residual map of the feature domain; and determine the target quality matrix based on the quality map.

In a possible implementation, the processing unit 1802 is further configured to: input the image into an encoder network to obtain a first feature map; input the first feature map into a context network to obtain a first prediction map; determine the first residual map based on the first feature map and the first prediction map; input the first feature map into a hyper encoder network to obtain first hyperprior information; quantize the first hyperprior information to obtain second hyperprior information; and input the second hyperprior information into a hyper scale decoder network to obtain the first Gaussian distribution parameter information.

The following describes, with reference to FIG. 19, a decoding apparatus configured to perform the foregoing decoding method.

It may be understood that, to implement the foregoing function, the decoding apparatus includes a corresponding hardware and/or software module for performing the function. With reference to the example algorithm steps described in embodiments disclosed in this specification, embodiments of this application can be implemented in a form of hardware or a combination of hardware and computer software. Whether a function is performed by hardware or hardware driven by computer software depends on particular applications and design constraint conditions of the technical solutions. Persons skilled in the art may use different methods to implement the described functions for each particular application with reference to embodiments, but it should not be considered that the implementation goes beyond the scope of embodiments of this application.

In embodiments of this application, the decoding apparatus may be divided into function modules based on the foregoing method examples. For example, each function module may be obtained through division based on each corresponding function, or two or more functions may be integrated into one processing module. The integrated module may be implemented in a form of hardware. It should be noted that module division in embodiments is an example and is merely logical function division. During actual implementation, there may be another division manner.

When each function module is obtained through division based on each corresponding function, FIG. 19 is a possible composition diagram of a decoding apparatus in the foregoing embodiments. As shown in FIG. 19, the decoding apparatus 1900 may include a transceiver unit 1901 and a processing unit 1902.

The transceiver unit 1901 is configured to obtain a bitstream.

The processing unit 1902 is configured to determine a target quality matrix based on the bitstream. The target quality matrix represents image quality of each region in a residual map of a feature domain.

The processing unit 1902 is further configured to scale third Gaussian distribution parameter information based on the target quality matrix to obtain fourth Gaussian distribution parameter information. The third Gaussian distribution parameter information is Gaussian distribution parameter information of the residual map of the feature domain.

The processing unit 1902 is further configured to decode the bitstream based on the fourth Gaussian distribution parameter information to obtain a third residual map. The third residual map is the residual map of the feature domain.

The processing unit 1902 is further configured to dequantize the third residual map based on the target quality matrix to obtain a fourth residual map.

The processing unit 1902 is further configured to determine a reconstructed image based on the fourth residual map.

In a possible implementation, the processing unit 1902 is specifically configured to: determine a target quality scaling matrix based on the target quality matrix, where the target quality scaling matrix represents a scaling value of each region in the residual map of the feature domain and the Gaussian distribution parameter information; determine a target quality scaling tensor based on the target quality scaling matrix, where the target quality scaling tensor represents scaling tensors of the residual map of the feature domain and the Gaussian distribution parameter information in three-dimensional space; and scale the third Gaussian distribution parameter information based on the target quality scaling tensor to obtain the fourth Gaussian distribution parameter information.

In a possible implementation, the processing unit 1902 is specifically configured to determine the target quality scaling tensor based on the target quality scaling matrix and a gain parameter. The gain parameter includes a channel-level quality adjustment gain vector and/or an image-level quality control factor.

In a possible implementation, the processing unit 1902 is specifically configured to: decode the bitstream to obtain a Gaussian distribution parameter of a target quality residual matrix of the target quality matrix; determine a probability distribution of the target quality residual matrix based on the Gaussian distribution parameter; decode the bitstream based on the probability distribution to obtain the target quality residual matrix; and determine the target quality matrix based on the target quality residual matrix.

In a possible implementation, the processing unit 1902 is specifically configured to: decode the bitstream to obtain a Gaussian distribution parameter of the target quality matrix; determine a probability distribution of the target quality matrix based on the Gaussian distribution parameter; and decode the bitstream based on the probability distribution to obtain the target quality matrix.

In a possible implementation, the processing unit 1902 is specifically configured to: decode the bitstream to obtain an index number of a target probability distribution, where the target probability distribution is determined from a plurality of candidate probability distributions based on a target quality residual matrix of the target quality matrix; decode the bitstream based on the target probability distribution to obtain the target quality residual matrix; and determine the target quality matrix based on the target quality residual matrix.

In a possible implementation, the processing unit 1902 is specifically configured to: decode the bitstream to obtain an index number of a target probability distribution, where the target probability distribution is determined from a plurality of candidate probability distributions based on the target quality matrix; and decode the bitstream based on the target probability distribution to obtain the target quality matrix.

In a possible implementation, the processing unit 1902 is further configured to: decode the bitstream to obtain a second feature map; and input the second feature map into a hyper scale decoder network to obtain the third Gaussian distribution parameter information.

When each function module is obtained through division based on each corresponding function, FIG. 20 is another possible composition diagram of a decoding apparatus in the foregoing embodiments. As shown in FIG. 20, the decoding apparatus 2000 may include a transceiver unit 2001 and a processing unit 2002.

The transceiver unit 2001 is configured to obtain a bitstream.

The processing unit 2002 is configured to determine a target quality matrix based on the bitstream. The target quality matrix represents image quality of each region in a residual map of a feature domain.

The processing unit 2002 is further configured to scale third Gaussian distribution parameter information based on the target quality matrix to obtain fourth Gaussian distribution parameter information. The third Gaussian distribution parameter information is Gaussian distribution parameter information of the residual map of the feature domain.

The processing unit 2002 is further configured to decode the bitstream based on the fourth Gaussian distribution parameter information to obtain a third residual map. The third residual map is the residual map of the feature domain.

The processing unit 2002 is further configured to determine a reconstructed image based on the third residual map.

When each function module is obtained through division based on each corresponding function, FIG. 21 is another possible composition diagram of a decoding apparatus in the foregoing embodiments. As shown in FIG. 21, the decoding apparatus 2100 may include a transceiver unit 2101 and a processing unit 2102.

The transceiver unit 2101 is configured to obtain a bitstream.

The processing unit 2102 is configured to determine a target quality matrix based on the bitstream. The target quality matrix represents image quality of each region in a residual map of a feature domain.

The processing unit 2102 is further configured to decode the bitstream based on third Gaussian distribution parameter information to obtain a third residual map. The third Gaussian distribution parameter information is Gaussian distribution parameter information of the residual map of the feature domain, and the third residual map is the residual map of the feature domain.

The processing unit 2102 is further configured to dequantize the third residual map based on the target quality matrix to obtain a fourth residual map.

The processing unit 2102 is further configured to determine a reconstructed image based on the fourth residual map.

An embodiment of this application further provides an encoding apparatus. The apparatus includes at least one processor. When the at least one processor executes program code or instructions, the foregoing related method steps are implemented to implement the encoding method in the foregoing embodiments.

Optionally, the apparatus may further include at least one memory, and the at least one memory is configured to store the program code or the instructions.

An embodiment of this application further provides a decoding apparatus. The apparatus includes at least one processor. When the at least one processor executes program code or instructions, the foregoing related method steps are implemented to implement the decoding method in the foregoing embodiments.

Optionally, the apparatus may further include at least one memory, and the at least one memory is configured to store the program code or the instructions.

An embodiment of this application further provides a bitstream. The bitstream includes a target quality matrix, a third residual map, and a third Gaussian distribution parameter. The target quality matrix represents image quality of each region in a residual map of a feature domain, the third residual map is the residual map of the feature domain, and the third Gaussian distribution parameter information is Gaussian distribution parameter information of the residual map of the feature domain. The target quality matrix is used to scale the third Gaussian distribution parameter information to obtain fourth Gaussian distribution parameter information. The target quality matrix is further used to dequantize the third residual map to obtain a fourth residual map.

An embodiment of this application further provides a computer storage medium. The computer storage medium stores computer instructions. When the computer instructions are run on an encoding apparatus, the encoding apparatus is enabled to perform the foregoing related method steps to implement the encoding method and the decoding method in the foregoing embodiments.

An embodiment of this application further provides a computer program product. When the computer program product is run on a computer, the computer is enabled to perform the foregoing related steps to implement the encoding method and the decoding method in the foregoing embodiments.

An embodiment of this application further provides an encoding/decoding apparatus. The apparatus may be specifically a chip, an integrated circuit, a component, or a module. Specifically, the apparatus may include a connected processor and a memory configured to store instructions, or the apparatus includes at least one processor, configured to obtain instructions from an external memory. When the apparatus runs, the processor may execute the instructions, so that the chip performs the encoding method and the decoding method in the foregoing method embodiments.

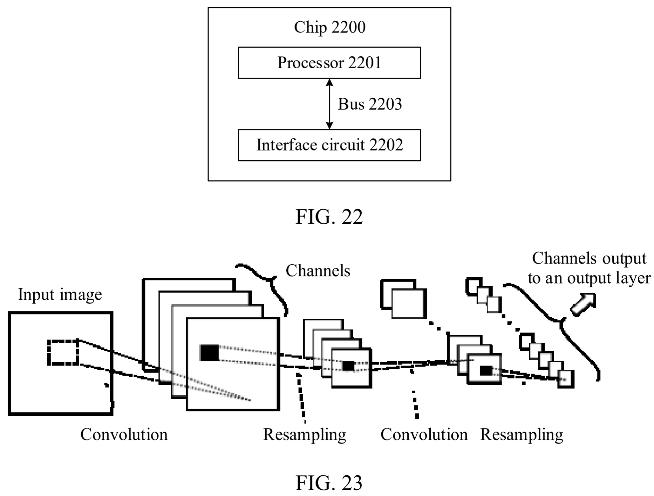

FIG. 22 is a diagram of a structure of a chip 2300. The chip 2200 includes one or more processors 2201 and an interface circuit 2202. Optionally, the chip 2200 may further include a bus 2203.

The processor 2201 may be an integrated circuit chip and has a signal processing capability. In an implementation process, steps in the foregoing encoding method and decoding method may be implemented via a hardware integrated logic circuit of the processor 2201, or by using instructions in a form of software.

Optionally, the processor 2201 may be a general-purpose processor, a digital signal processor (digital signal processing, DSP), an application-specific integrated circuit (application specific integrated circuit, ASIC), a field-programmable gate array (field-programmable gate array, FPGA) or another programmable logic device, a discrete gate or a transistor logic device, or a discrete hardware component. The processor 2201 may implement or perform the methods and steps that are disclosed in embodiments of this application. The general-purpose processor may be a microprocessor, or the processor may be any conventional processor or the like.

The interface circuit 2202 may be used to send or receive data, instructions, or information. The processor 2201 may process the data, the instructions, or other information received through the interface circuit 2202, and may send processed information through the interface circuit 2202.

Optionally, the chip further includes a memory. The memory may include a read-only memory and a random access memory, and provide operation instructions and data for the processor. A part of the memory may further include a non-volatile random access memory (non-volatile random access memory, NVRAM).

Optionally, the memory stores an executable software module or a data structure, and the processor may perform a corresponding operation by invoking the operation instructions stored in the memory (the operation instructions may be stored in an operating system).

Optionally, the chip may be used in the encoding apparatus or a DOP in embodiments of this application. Optionally, the interface circuit 2202 may be configured to output an execution result of the processor 2201. For the encoding method and the decoding method provided in one or more of embodiments of this application, refer to the foregoing embodiments. Details are not described herein again.

It should be noted that functions corresponding to the processor 2201 and the interface circuit 2202 may be implemented by using a hardware design, or may be implemented by using a software design, or may be implemented by using a combination of software and hardware. This is not limited herein.

FIG. 23 schematically illustrates a general concept of processing based on a neural network such as a convolutional neural network (convolutional neural network, CNN). The convolutional neural network includes an input layer, an output layer, and a plurality of hidden layers. The input layer is a layer that provides an input (for example, a part of an input image shown in FIG. 23) for processing. The hidden layers of the CNN usually include a series of convolutional layers, which are convolved with multiplication or other dot products. A result of a layer is one or more feature maps (represented by empty rectangles constituted by solid lines), sometimes referred to as a channel. Resampling (such as subsampling) may be involved at some or all layers. Therefore, the feature map may become smaller, as shown in FIG. 23. It is noted that convolution of a stride length can also reduce a size of the input feature map (resampling). An activation function of the CNN is usually a ReLU (rectified linear unit) layer, followed by additional convolution such as a pooling layer, a fully connected layer, and a normalization layer, which are referred to as the hidden layers for inputs and outputs of the pooling layer, the fully connected layer, and the normalization layer being hidden by the activation function and final convolution. Although these layers are commonly referred to as the convolution, this is only a convention. Mathematically, the convolution is technically a sliding dot product or cross-correlation. This is important for an index of a matrix because the convolution affects how to determine a weight at a particular index point.

When a CNN used to process an image is programmed, as shown in FIG. 23, an input is a tensor having a shape of (image quantity)×(image width)×(image height)×(image depth). It should be known that the image depth may include a channel of the image. After passing through the convolutional layers, the image is abstracted as a feature map having a shape of (image quantity)×(feature map width)×(feature map height)×(feature map channel). The convolutional layer of the neural network should have the following attributes: a convolution kernel (hyperparameter) defined by a width and a height; quantities (hyperparameters) of input and output channels; and a depth (input channel) of a convolutional filter being equal to a channel quantity (depth) of an input feature map.

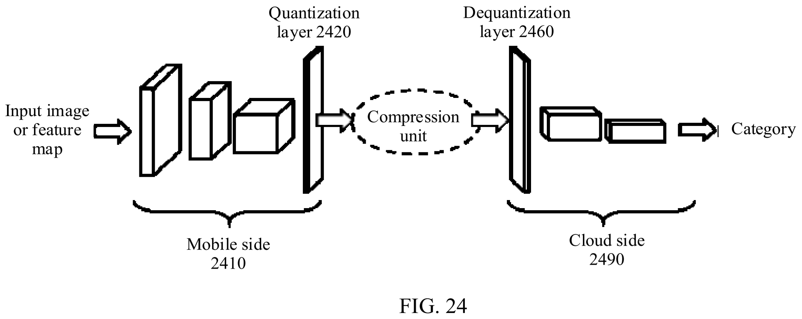

Video coding for machine (VCM) is another popular direction of computer science. A main idea for this method is transmitting a coded representation of image or video information for further processing by a computer vision (CV) algorithm, such as object segmentation, detection, and recognition. Compared with conventional image and video coding that targets human perception, quality features, for example, object detection precision instead of reconstructed quality, are performance of a computer vision task. As shown in FIG. 24,

the video coding for machine, also known as collaborative intelligence, is a new paradigm for efficiently deploying deep neural networks in mobile cloud infrastructure. Network division is performed between a mobile side 2410 and a cloud side 2490 (for example, a cloud server), to allocate computing workload to minimize total energy and/or a delay of a system. In general, the collaborative intelligence is a paradigm in which the processing of a neural network is distributed between two or more different computing nodes, for example, devices, but generally, any nodes defined by functions. Herein, the term "node" does not refer to the foregoing neural network node. Instead, the (computing) nodes herein refer to (physically or at least logically) independent devices/modules that implement a part of the neural network. Such a device may be a mixture of different servers, different end-user devices, servers and/or user equipment and/or clouds and/or processors, and the like. In other words, the computing nodes may be considered as nodes belonging to a same neural network, and communicate with each other to transmit encoded data within/for the neural network. For example, to perform complex computations, one or more layers may be performed on a first device (such as a device on the mobile side 2410), and one or more layers may be performed on another device (such as a cloud server on the cloud side 2490). However, distributions may alternatively be more refined, and a single layer may be performed on a plurality of devices. In this disclosure, the term "a plurality of" means two or more. In some existing solutions, a part of a neural network function is performed on or more devices (user equipment, edge devices, or the like), and an output (feature map) is transferred to a cloud. The cloud is a collection of processing or computing systems located outside the device that is operating the part of the neural network. A concept of the collaborative intelligence is also extended to model training. In this case, data flows bidirectionally: from the cloud to a mobile device in a back propagation process of training, and from the mobile device to the cloud in a forward transfer and inference process of training (as shown in FIG. 24).

Some work proposes semantic image compression by encoding deep features and reconstructing an input image from the deep features. Uniform quantization-based compression is shown, followed by context-adaptive binary arithmetic coding (CABAC) from H.264. In some scenarios, sending an output of a hidden layer (depth feature map) from the mobile component 2410 to the cloud 2490 may be more efficient, instead of sending compressed natural image data to the cloud and performing object detection based on a reconstructed image. Therefore, a quantization layer 2420 may be included by the mobile side 2410 for efficient compression of data (features) generated by the mobile side 2410. Correspondingly, the cloud side 2490 may include an inverse quantization layer 2460. Effective compression of feature maps is beneficial to image and video compression and reconstruction of human perception and machine vision. An entropy coding method, such as arithmetic coding, is a popular method for compressing deep features (for example, feature maps).

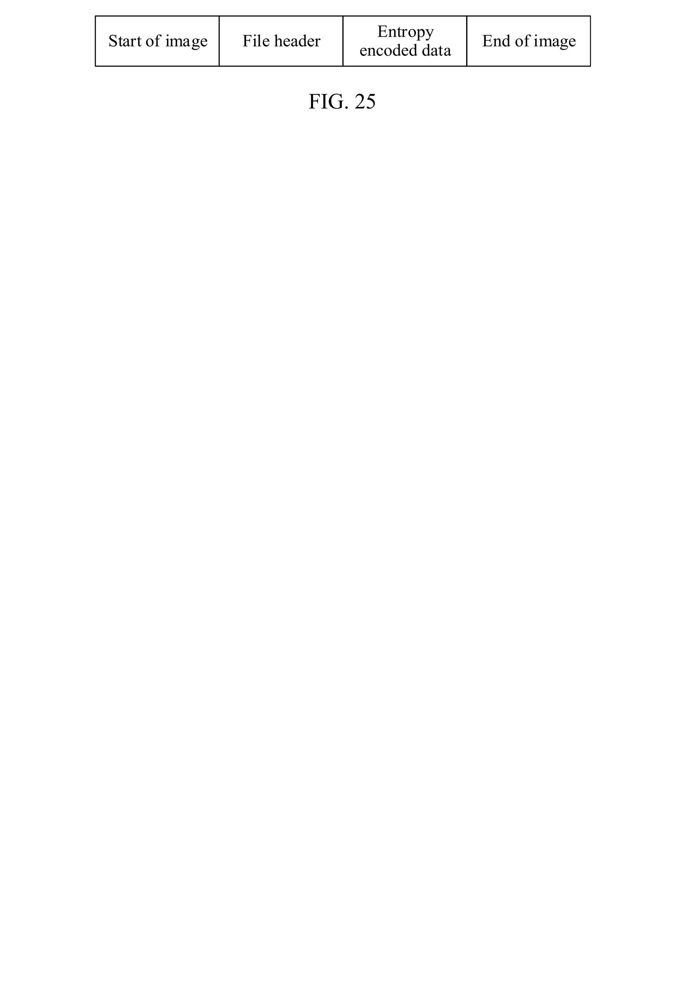

FIG. 25 shows a structure of a bitstream according to an embodiment of this application. As shown in FIG. 25, the bitstream includes a start of image (start of image), a file header (file header), entropy encoded data (entropy encoded data), and an end of image (end of image).

In a possible implementation, the foregoing index number of the Gaussian distribution parameter, the foregoing Gaussian distribution parameter, the foregoing target probability distribution, and the foregoing index number of the target probability distribution may be stored in the file header.

In a possible implementation, the foregoing target quality residual matrix or target quality matrix may be stored in the entropy encoded data.

The apparatus, the computer storage medium, the computer program product, or the chip provided in embodiments are all configured to perform the corresponding methods provided above. Therefore, for beneficial effect that can be achieved by the apparatus, the computer storage medium, the computer program product, or the chip, refer to beneficial effect of the corresponding methods provided above. Details are not described herein again.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

Persons of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. Persons skilled in the art may use different methods to implement the described functions for each particular application, but it should not be considered that the implementation goes beyond the scope of embodiments of this application.

It may be clearly understood by persons skilled in the art that, for the purpose of convenient and brief description, for a detailed working process of the foregoing system, apparatus, and unit, refer to a corresponding process in the foregoing method embodiments. Details are not described herein again.

In the several embodiments provided in embodiments of this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The foregoing units described as separate parts may or may not be physically separate, and parts displayed as units may or may not be physical units, may be located in one location, or may be distributed on a plurality of network units. Some or all of the units may be selected based on an actual requirement to achieve the objectives of the solutions of embodiments.

In addition, functional units in embodiments of this application may be integrated into one processing unit, or each of the units may exist alone physically, or two or more units are integrated into one unit.

When the functions are implemented in a form of software functional unit and sold or used as an independent product, the functions may be stored in a computer-readable storage medium. Based on such an understanding, the technical solutions of embodiments of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium, for example, a USB flash drive, a removable hard disk, a read-only memory (Read Only Memory, ROM), a random access memory (Random Access Memory, RAM), a magnetic disk, an optical disc, or the like that can store program code.

The foregoing descriptions are merely specific implementations of embodiments of this application, but the protection scope of embodiments of this application is not limited thereto. Any variation or replacement readily figured out by persons skilled in the art within the technical scope disclosed in embodiments of this application shall fall within the protection scope of embodiments of this application. Therefore, the protection scope of embodiments of this application shall be subject to the protection scope of the claims.

**Claims**

1. An encoding method, comprising:

   obtaining a target quality matrix, wherein the target quality matrix represents image quality of each region in a residual map of a feature domain;
   scaling a first residual map and/or first Gaussian distribution parameter information based on the target quality matrix to obtain a second residual map and/or second Gaussian distribution parameter information, wherein the first residual map is the residual map of the feature domain, and the first Gaussian distribution parameter information is Gaussian distribution parameter information of the residual map of the feature domain; and
   generating a bitstream based on the target quality matrix, the second residual map, and/or the second Gaussian distribution parameter information.

2. The method according to claim 1, wherein scaling the first residual map and the first Gaussian distribution parameter information based on the target quality matrix to obtain the second residual map and the second Gaussian distribution parameter information comprises:

   determining a target quality scaling matrix based on the target quality matrix, wherein the target quality scaling matrix represents a scaling value of each region in the residual map of the feature domain and/or the Gaussian distribution parameter information;
   determining a target quality scaling tensor based on the target quality scaling matrix, wherein the target quality scaling tensor represents a scaling tensor of the residual map of the feature domain and/or the Gaussian distribution parameter information in three-dimensional space; and
   scaling the first residual map based on the target quality scaling tensor to obtain the second residual map, and/or scaling the first Gaussian distribution parameter information based on the target quality scaling tensor to obtain the second Gaussian distribution parameter information.

3. The method according to claim 2, wherein determining the target quality scaling tensor based on the target quality scaling matrix comprises:
   determining the target quality scaling tensor based on the target quality scaling matrix and a gain parameter, wherein the gain parameter comprises a channel-level quality adjustment gain vector and/or an image-level quality control factor.

4. The encoding method according to any one of claims 1 to 3, wherein generating the bitstream based on the target quality matrix, the second residual map, and the second Gaussian distribution parameter information comprises: encoding the target quality matrix and the second residual map to generate the bitstream, wherein the second residual map is encoded based on the second Gaussian distribution parameter information.

5. The method according to claim 4, wherein encoding the target quality matrix to generate the bitstream comprises: encoding the target quality matrix or a target quality residual matrix of the target quality matrix to generate the bitstream, wherein the target quality residual matrix represents a residual value of each piece of image quality of the target quality matrix.

6. The method according to claim 5, wherein the method further comprises: generating the target quality residual matrix of the target quality matrix based on the target quality matrix.

7. The method according to claim 5 or 6, wherein encoding the target quality residual matrix of the target quality matrix to generate the bitstream comprises:

   determining a Gaussian distribution parameter of the target quality residual matrix;
   determining a probability distribution of the target quality residual matrix based on the Gaussian distribution parameter;
   writing the Gaussian distribution parameter into the bitstream; and
   performing entropy encoding on the target quality residual matrix based on the probability distribution.

8. The method according to claim 5 or 6, wherein encoding the target quality matrix to generate the bitstream comprises:

   determining a Gaussian distribution parameter of the target quality matrix;
   determining a probability distribution of the target quality matrix based on the Gaussian distribution parameter;
   writing the Gaussian distribution parameter into the bitstream; and
   performing entropy encoding on the target quality matrix based on the probability distribution.

9. The method according to claim 5 or 6, wherein encoding the target quality residual matrix of the target quality matrix to generate the bitstream comprises:

   determining a target probability distribution from a plurality of candidate probability distributions based on the target quality residual matrix;
   writing an index number of the target probability distribution into the bitstream; and
   performing entropy encoding on the target quality residual matrix based on the target probability distribution.

10. The method according to claim 5 or 6, wherein encoding the target quality matrix to generate the bitstream comprises:

    determining a target probability distribution from a plurality of candidate probability distributions based on the target quality matrix;
    writing an index number of the target probability distribution into the bitstream; and
    performing entropy encoding on the target quality matrix based on the target probability distribution.

11. The method according to any one of claims 1 to 10, wherein obtaining the target quality matrix comprises:

    obtaining a quality map, wherein the quality map is used to record the image quality of each region in the residual map of the feature domain; and
    determining the target quality matrix based on the quality map.

12. The method according to any one of claims 1 to 11, wherein the method further comprises:

    inputting the image into an encoder network to obtain a first feature map;
    inputting the first feature map into a context network to obtain a first prediction map;
    determining the first residual map based on the first feature map and the first prediction map;
    inputting the first feature map into a hyper encoder network to obtain first hyperprior information;

quantizing the first hyperprior information to obtain second hyperprior information; and
inputting the second hyperprior information into a hyper scale decoder network to obtain the first Gaussian distribution parameter information.

13. A decoding method, comprising:

obtaining a bitstream;
determining a target quality matrix based on the bitstream, wherein the target quality matrix represents image quality of each region in a residual map of a feature domain;
scaling third Gaussian distribution parameter information based on the target quality matrix to obtain fourth Gaussian distribution parameter information, wherein the third Gaussian distribution parameter information is Gaussian distribution parameter information of the residual map of the feature domain;
decoding the bitstream based on the fourth Gaussian distribution parameter information to obtain a third residual map, wherein the third residual map is the residual map of the feature domain;
dequantizing the third residual map based on the target quality matrix to obtain a fourth residual map; and
determining a reconstructed image based on the fourth residual map.

14. The method according to claim 13, wherein scaling the third Gaussian distribution parameter information based on the target quality matrix to obtain the fourth Gaussian distribution parameter information comprises:

determining a target quality scaling matrix based on the target quality matrix, wherein the target quality scaling matrix represents a scaling value of each region in the residual map of the feature domain and the Gaussian distribution parameter information;
determining a target quality scaling tensor based on the target quality scaling matrix, wherein the target quality scaling tensor represents scaling tensors of the residual map of the feature domain and the Gaussian distribution parameter information in three-dimensional space; and
scaling the third Gaussian distribution parameter information based on the target quality scaling tensor to obtain the fourth Gaussian distribution parameter information.

15. The method according to claim 14, wherein determining the target quality scaling matrix based on the target quality matrix comprises:
determining the target quality scaling tensor based on the target quality scaling matrix and a gain parameter, wherein the gain parameter comprises a channel-level quality adjustment gain vector and/or an image-level quality control factor.

16. The method according to any one of claims 13 to 15, wherein determining the target quality matrix based on the bitstream comprises:

decoding the bitstream to obtain a Gaussian distribution parameter of a target quality residual matrix of the target quality matrix;
determining a probability distribution of the target quality residual matrix based on the Gaussian distribution parameter;
decoding the bitstream based on the probability distribution to obtain the target quality residual matrix; and
determining the target quality matrix based on the target quality residual matrix.

17. The method according to any one of claims 13 to 15, wherein determining the target quality matrix based on the bitstream comprises:

decoding the bitstream to obtain a Gaussian distribution parameter of the target quality matrix;
determining a probability distribution of the target quality matrix based on the Gaussian distribution parameter; and
decoding the bitstream based on the probability distribution to obtain the target quality matrix.

18. The method according to any one of claims 13 to 15, wherein determining the target quality matrix based on the bitstream comprises:

decoding the bitstream to obtain an index number of a target probability distribution, wherein the target probability distribution is determined from a plurality of candidate probability distributions based on a target quality residual matrix of the target quality matrix;

decoding the bitstream based on the target probability distribution to obtain the target quality residual matrix; and

determining the target quality matrix based on the target quality residual matrix.

19. The method according to any one of claims 13 to 15, wherein determining the target quality matrix based on the bitstream comprises:

decoding the bitstream to obtain an index number of a target probability distribution, wherein the target probability distribution is determined from a plurality of candidate probability distributions based on the target quality matrix; and

decoding the bitstream based on the target probability distribution to obtain the target quality matrix.

20. The method according to any one of claims 13 to 19, wherein the method further comprises:

decoding the bitstream to obtain a second feature map; and

inputting the second feature map into a hyper scale decoder network to obtain the third Gaussian distribution parameter information.

21. A decoding method, comprising:

obtaining a bitstream;

determining a target quality matrix based on the bitstream, wherein the target quality matrix represents image quality of each region in a residual map of a feature domain;

scaling third Gaussian distribution parameter information based on the target quality matrix to obtain fourth Gaussian distribution parameter information, wherein the third Gaussian distribution parameter information is Gaussian distribution parameter information of the residual map of the feature domain;

decoding the bitstream based on the fourth Gaussian distribution parameter information to obtain a third residual map, wherein the third residual map is the residual map of the feature domain; and

determining a reconstructed image based on the third residual map.

22. A decoding method, comprising:

obtaining a bitstream;

determining a target quality matrix based on the bitstream, wherein the target quality matrix represents image quality of each region in a residual map of a feature domain;

decoding the bitstream based on third Gaussian distribution parameter information to obtain a third residual map, wherein the third Gaussian distribution parameter information is Gaussian distribution parameter information of the residual map of the feature domain, and the third residual map is the residual map of the feature domain;

dequantizing the third residual map based on the target quality matrix to obtain a fourth residual map; and

determining a reconstructed image based on the fourth residual map.

23. An encoding apparatus, comprising a transceiver unit and a processing unit, wherein

the transceiver unit is configured to obtain a target quality matrix, wherein the target quality matrix represents image quality of each region in a residual map of a feature domain;

the processing unit is configured to scale a first residual map and/or first Gaussian distribution parameter information based on the target quality matrix to obtain a second residual map and/or second Gaussian distribution parameter information, wherein the first residual map is the residual map of the feature domain, and the first Gaussian distribution parameter information is Gaussian distribution parameter information of the residual map of the feature domain; and

the processing unit is further configured to generate a bitstream based on the target quality matrix, the second residual map, and/or the second Gaussian distribution parameter information.

24. The apparatus according to claim 23, wherein the processing unit is specifically configured to:

determine a target quality scaling matrix based on the target quality matrix, wherein the target quality scaling matrix represents a scaling value of each region in the residual map of the feature domain and/or the Gaussian distribution parameter information;

determine a target quality scaling tensor based on the target quality scaling matrix, wherein the target quality scaling tensor represents a scaling tensor of the residual map of the feature domain and/or the Gaussian distribution parameter information in three-dimensional space; and

scale the first residual map based on the target quality scaling tensor to obtain the second residual map, and/or scale the first Gaussian distribution parameter information based on the target quality scaling tensor to obtain the second Gaussian distribution parameter information.

25. The apparatus according to claim 24, wherein the processing unit is specifically configured to:
determine the target quality scaling tensor based on the target quality scaling matrix and a gain parameter, wherein the gain parameter comprises a channel-level quality adjustment gain vector and/or an image-level quality control factor.

26. The apparatus according to any one of claims 23 to 25, wherein the processing unit is specifically configured to:
encode the target quality matrix and the second residual map to generate the bitstream, wherein the second residual map is encoded based on the second Gaussian distribution parameter information.

27. The apparatus according to claim 26, wherein the processing unit is specifically configured to:
encode the target quality matrix or a target quality residual matrix of the target quality matrix to generate the bitstream.

28. The apparatus according to claim 27, wherein the processing unit is further configured to:
generate the target quality residual matrix of the target quality matrix based on the target quality matrix, wherein the target quality residual matrix represents a residual value of each piece of image quality of the target quality matrix.

29. The apparatus according to claim 27 or 28, wherein the processing unit is specifically configured to:

    determine a Gaussian distribution parameter of the target quality residual matrix;
    determine a probability distribution of the target quality residual matrix based on the Gaussian distribution parameter;
    write the Gaussian distribution parameter into the bitstream; and
    perform entropy encoding on the target quality residual matrix based on the probability distribution.

30. The apparatus according to claim 27 or 28, wherein the processing unit is specifically configured to:

    determine a Gaussian distribution parameter of the target quality matrix;
    determine a probability distribution of the target quality matrix based on the Gaussian distribution parameter;
    write the Gaussian distribution parameter into the bitstream; and
    perform entropy encoding on the target quality matrix based on the probability distribution.

31. The apparatus according to claim 27 or 28, wherein the processing unit is specifically configured to:

    determine a target probability distribution from a plurality of candidate probability distributions based on the target quality residual matrix;
    write an index number of the target probability distribution into the bitstream; and
    perform entropy encoding on the target quality residual matrix based on the target probability distribution.

32. The apparatus according to claim 27 or 28, wherein the processing unit is specifically configured to:

    determine a target probability distribution from a plurality of candidate probability distributions based on the target quality matrix;
    write an index number of the target probability distribution into the bitstream; and
    perform entropy encoding on the target quality matrix based on the target probability distribution.

33. The apparatus according to any one of claims 23 to 32, wherein the obtaining unit is specifically configured to:

    obtain a quality map, wherein the quality map is used to record the image quality of each region in the residual map of the feature domain; and
    determine the target quality matrix based on the quality map.

34. The apparatus according to any one of claims 23 to 33, wherein the processing unit is further configured to:

input the image into an encoder network to obtain a first feature map;
input the first feature map into a context network to obtain a first prediction map;
determine the first residual map based on the first feature map and the first prediction map;
input the first feature map into a hyper encoder network to obtain first hyperprior information;
quantize the first hyperprior information to obtain second hyperprior information; and
input the second hyperprior information into a hyper scale decoder network to obtain the first Gaussian distribution parameter information.

**35.** A decoding apparatus, comprising a transceiver unit and a processing unit, wherein

the transceiver unit is configured to obtain a bitstream;
the processing unit is configured to determine a target quality matrix based on the bitstream, wherein the target quality matrix represents image quality of each region in a residual map of a feature domain;
the processing unit is further configured to scale third Gaussian distribution parameter information based on the target quality matrix to obtain fourth Gaussian distribution parameter information, wherein the third Gaussian distribution parameter information is Gaussian distribution parameter information of the residual map of the feature domain;
the processing unit is further configured to decode the bitstream based on the fourth Gaussian distribution parameter information to obtain a third residual map, wherein the third residual map is the residual map of the feature domain;
the processing unit is further configured to dequantize the third residual map based on the target quality matrix to obtain a fourth residual map; and
the processing unit is further configured to determine a reconstructed image based on the fourth residual map.

**36.** The apparatus according to claim 35, wherein the processing unit is specifically configured to:

determine a target quality scaling matrix based on the target quality matrix, wherein the target quality scaling matrix represents a scaling value of each region in the residual map of the feature domain and the Gaussian distribution parameter information;
determine a target quality scaling tensor based on the target quality scaling matrix, wherein the target quality scaling tensor represents scaling tensors of the residual map of the feature domain and the Gaussian distribution parameter information in three-dimensional space; and
scale the third Gaussian distribution parameter information based on the target quality scaling tensor to obtain the fourth Gaussian distribution parameter information.

**37.** The apparatus according to claim 36, wherein the processing unit is specifically configured to:
determine the target quality scaling tensor based on the target quality scaling matrix and a gain parameter, wherein the gain parameter comprises a channel-level quality adjustment gain vector and/or an image-level quality control factor.

**38.** The apparatus according to any one of claims 35 to 37, wherein the processing unit is specifically configured to:

decode the bitstream to obtain a Gaussian distribution parameter of a target quality residual matrix of the target quality matrix;
determine a probability distribution of the target quality residual matrix based on the Gaussian distribution parameter;
decode the bitstream based on the probability distribution to obtain the target quality residual matrix; and
determine the target quality matrix based on the target quality residual matrix.

**39.** The apparatus according to any one of claims 35 to 37, wherein the processing unit is specifically configured to:

decode the bitstream to obtain a Gaussian distribution parameter of the target quality matrix;
determine a probability distribution of the target quality matrix based on the Gaussian distribution parameter; and
decode the bitstream based on the probability distribution to obtain the target quality matrix.

**40.** The apparatus according to any one of claims 35 to 37, wherein the processing unit is specifically configured to:

decode the bitstream to obtain an index number of a target probability distribution, wherein the target probability distribution is determined from a plurality of candidate probability distributions based on a target quality residual matrix of the target quality matrix;
decode the bitstream based on the target probability distribution to obtain the target quality residual matrix; and
determine the target quality matrix based on the target quality residual matrix.

41. The apparatus according to any one of claims 35 to 37, wherein the processing unit is specifically configured to:

decode the bitstream to obtain an index number of a target probability distribution, wherein the target probability distribution is determined from a plurality of candidate probability distributions based on the target quality matrix; and
decode the bitstream based on the target probability distribution to obtain the target quality matrix.

42. The apparatus according to any one of claims 35 to 41, wherein the processing unit is further configured to:

decode the bitstream to obtain a second feature map; and
input the second feature map into a hyper scale decoder network to obtain the third Gaussian distribution parameter information.

43. A decoding apparatus, comprising a transceiver unit and a processing unit, wherein

the transceiver unit is configured to obtain a bitstream;
the processing unit is configured to determine a target quality matrix based on the bitstream, wherein the target quality matrix represents image quality of each region in a residual map of a feature domain;
the processing unit is further configured to scale third Gaussian distribution parameter information based on the target quality matrix to obtain fourth Gaussian distribution parameter information, wherein the third Gaussian distribution parameter information is Gaussian distribution parameter information of the residual map of the feature domain;
the processing unit is further configured to decode the bitstream based on the fourth Gaussian distribution parameter information to obtain a third residual map, wherein the third residual map is the residual map of the feature domain; and
the processing unit is further configured to determine a reconstructed image based on the third residual map.

44. A decoding apparatus, comprising a transceiver unit and a processing unit, wherein

the transceiver unit is configured to obtain a bitstream;
the processing unit is configured to determine a target quality matrix based on the bitstream, wherein the target quality matrix represents image quality of each region in a residual map of a feature domain;
the processing unit is further configured to decode the bitstream based on third Gaussian distribution parameter information to obtain a third residual map, wherein the third Gaussian distribution parameter information is Gaussian distribution parameter information of the residual map of the feature domain, and the third residual map is the residual map of the feature domain;
the processing unit is further configured to dequantize the third residual map based on the target quality matrix to obtain a fourth residual map; and
the processing unit is further configured to determine a reconstructed image based on the fourth residual map.

45. A bitstream, comprising a target quality matrix, a third residual map, and a third Gaussian distribution parameter, wherein the target quality matrix represents image quality of each region in a residual map of a feature domain, the third residual map is the residual map of the feature domain, and the third Gaussian distribution parameter information is Gaussian distribution parameter information of the residual map of the feature domain;

the target quality matrix is used to scale the third Gaussian distribution parameter information to obtain fourth Gaussian distribution parameter information; and
the target quality matrix is further used to dequantize the third residual map to obtain a fourth residual map.

46. An encoding apparatus, comprising at least one processor and a memory, wherein the at least one processor executes a program or instructions stored in the memory, to enable the encoding apparatus to implement the method according to any one of claims 1 to 12.

47. A decoding apparatus, comprising at least one processor and a memory, wherein the at least one processor executes a program or instructions stored in the memory, to enable the decoding apparatus to implement the method according to any one of claims 13 to 22.

48. A computer-readable storage medium, wherein the computer-readable storage medium stores a video bitstream obtained by performing the method according to any one of claims 1 to 12 by one or more processors.

49. A computer-readable storage medium, configured to store a computer program, wherein when the computer program is run on a computer or a processor, the computer or the processor is enabled to implement the method according to any one of claims 1 to 12 or any one of claims 13 to 22.

50. A computer program product, wherein the computer program product comprises instructions, and when the instructions are run on a computer or a processor, the computer or the processor is enabled to implement the method according to any one of claims 1 to 12 or any one of claims 13 to 22.

10

Source device 12
- Image source 16
- Raw image data 17
- Preprocessor 18
- Preprocessed image data 19
- Encoder 20
- Encoded image data 21
- Communication interface 22

Training engine 25

Communication channel 13

Destination device 14
- Display device 34
- Post-processed image data 33
- Post-processor 32
- Decoded image data 31
- Decoder 30
- Encoded image data 21
- Communication interface 28

FIG. 1a

FIG. 1b

FIG. 2

Quantized coefficient 309

Dequantized coefficient 311

310

Dequantization unit

Inverse transform processing unit

312

Reconstructed residual block 313

Decoder 30

Prediction block 365

Reconstruction unit 314

Reconstructed block 315

Mode application unit 360

Entropy decoding unit

304

354 — Intra prediction unit

344 — Inter prediction unit

Syntax element 366

Loop filter

320

Filtered block 321

Decoded picture buffer

330

Decoded image 311

Decoded image 331

Encoded image data 21

Output end 332

FIG. 3

400

Video coding device

410

420

Processor

430

Neural network-based codec

450

Receiver unit

470

440

Transmitter unit

460

Memory

Downlink port

Uplink port

**FIG. 4**

500

502

Processor

518

Display

512

| Data | 506 |
| Application: 1... | |
| Application: video coding | 510 |
| Application: ...N | |
| Operating system | 508 |

504

**FIG. 5**

To-be-compressed image → Feature extraction module → Feature quantization module → Entropy encoding

→ Compressed bitstream →

Entropy decoding ← Feature dequantization module ← Feature decoding module → Reconstructed image

FIG. 6

FIG. 7

FIG. 8

FIG. 9

```
┌──────────┐         ┌──────────────┐      ┌──────────────┐      ┌──────────┐
│ Quality  │         │ Y-component  │      │ Y-component  │      │ Quality  │
│ matrix   │         │ hyper-encoder│─────▶│ hyper-decoder│      │ matrix   │
│          │         │ module       │      │ module       │      │          │
└────┬─────┘         └──────────────┘      └──────┬───────┘      └────┬─────┘
     │                                            │                   │
```

┌──────────┐   ┌──────────┐   ┌──────────┐   ┌──────────┐   ┌──────────┐   ┌──────────┐   ┌──────────┐   ┌──────────┐
│    Y     │   │Y-component│  │Y-component│  │ Entropy  │   │ Entropy  │   │Y-component│  │Y-component│  │Reconstructed│
│ component│──▶│ encoder  │──▶│bit rate   │─▶│ encoding │──▶│ decoding │──▶│dequantiza-│─▶│ decoder  │──▶│ image of the│
│ of an    │   │ network  │   │ control   │   │ module   │   │ module   │   │tion module│  │ network  │   │ Y component │
│ image    │   │ module   │   │ module    │   │          │   │          │   │          │   │          │   │             │
└──────────┘   └──────────┘   └──────────┘   └──────────┘   └──────────┘   └──────────┘   └──────────┘   └──────────┘

┌──────────┐   ┌──────────┐   ┌──────────┐   ┌──────────┐   ┌──────────┐   ┌──────────┐   ┌──────────┐   ┌──────────┐
│    UV    │   │UV-component│ │UV-component│ │ Entropy  │   │ Entropy  │   │UV-component│ │UV-component│ │Reconstructed│
│components │──▶│ encoder  │──▶│bit rate   │─▶│ encoding │──▶│ decoding │──▶│dequantiza-│─▶│ decoder  │──▶│ image of the│
│ of the   │   │ network  │   │ control   │   │ module   │   │ module   │   │tion module│  │ network  │   │UV components│
│ image    │   │ module   │   │ module    │   │          │   │          │   │          │   │ module   │   │             │
└──────────┘   └──────────┘   └──────────┘   └──────────┘   └──────────┘   └──────────┘   └──────────┘   └──────────┘

```
                    ┌──────────┐   ┌──────────────┐      ┌──────────────┐      ┌──────────┐
                    │ Quality  │   │ UV-component │      │ UV-component │      │ Quality  │
                    │ matrix   │   │ hyper-encoder│─────▶│ hyper-decoder│      │ matrix   │
                    │          │   │ module       │      │ module       │      │          │
                    └──────────┘   └──────────────┘      └──────────────┘      └──────────┘
```

FIG. 10

| Obtain a target quality matrix | S1101 |

↓

| Scale a first residual map and/or first Gaussian distribution parameter information based on the target quality matrix to obtain a second residual map and/or second Gaussian distribution parameter information | S1102 |

↓

| Generate a bitstream based on the target quality matrix, the second residual map, and/or the second Gaussian distribution parameter information | S1103 |

## FIG. 11

Quality map → Quality scaling map → ⊗ → Scaling tensor

Gain parameter

## FIG. 12

Encoder side framework

FIG. 13

| Obtain a bitstream | S1401 |

| Determine a target quality matrix based on the bitstream | S1402 |

| Scale third Gaussian distribution parameter information based on the target quality matrix to obtain fourth Gaussian distribution parameter information | S1403 |

| Decode the bitstream based on the fourth Gaussian distribution parameter information to obtain a third residual map | S1404 |

| Dequantize the third residual map based on the target quality matrix to obtain a fourth residual map | S1405 |

| Determine a reconstructed image based on the fourth residual map | S1406 |

FIG. 14

Obtain a bitstream — S1501

Determine a target quality matrix based on the bitstream — S1502

Scale third Gaussian distribution parameter information based on the target quality matrix to obtain fourth Gaussian distribution parameter information — S1503

Decode the bitstream based on the fourth Gaussian distribution parameter information to obtain a third residual map — S1504

Determine a reconstructed image based on the third residual map — S1505

FIG. 15

Obtain a bitstream — S1601

Determine a target quality matrix based on the bitstream — S1602

Decode the bitstream based on third Gaussian distribution parameter information to obtain a third residual map — S1603

Dequantize the third residual map based on the target quality matrix to obtain a fourth residual map — S1604

Determine a reconstructed image based on the fourth residual map — S1605

FIG. 16

EP 4 697 727 A1

Decoder side framework

Residual map r

Bitstream

Quality matrix

Gain unit module

Feature map y

Hyper scale decoder network

Quality matrix

Residual map r`

Third Gaussian distribution parameter information

Sigma scaling module

Fourth Gaussian distribution parameter information

Decoder network

Reconstructed image

**FIG. 17**

Encoding apparatus 1800

Transceiver unit 1801

Processing unit 1802

FIG. 18

Decoding apparatus 1900

Transceiver unit 1901

Processing unit 1902

FIG. 19

Decoding apparatus 2000

Transceiver unit 2001

Processing unit 2002

FIG. 20

Decoding apparatus 2100

Transceiver unit 2101

Processing unit 2102

FIG. 21

Chip 2200

Processor 2201

Bus 2203

Interface circuit 2202

FIG. 22

Channels

Channels output
to an output layer

Input image

Convolution    Resampling    Convolution    Resampling

FIG. 23

FIG. 24

| Start of image | File header | Entropy encoded data | End of image |
|---|---|---|---|

FIG. 25

## INTERNATIONAL SEARCH REPORT

| | International application No. |
|---|---|
| | **PCT/CN2024/074438** |

| | | |
|---|---|---|
| **A.** | **CLASSIFICATION OF SUBJECT MATTER** | |

H04N19/91(2014.01)i; G06N3/04(2023.01)i

According to International Patent Classification (IPC) or to both national classification and IPC

| | | |
|---|---|---|
| **B.** | **FIELDS SEARCHED** | |

Minimum documentation searched (classification system followed by classification symbols)

IPC:H04N,G06N

Documentation searched other than minimum documentation to the extent that such documents are included in the fields searched

Electronic data base consulted during the international search (name of data base and, where practicable, search terms used)

CNTXT, ENTXT, ENTXTC, VEN, WPABS, CJFD: 质量, 矩阵, 图, 阵列, 残差, 缩放, 调整, 放大, 缩小, 改变, 概率分布, 高斯分布, 区域, 图片, 图像, 块, JPEG, 模型, 人工智能, 深度学习, 神经网络, 训练, 视频, 输入, 引入, quality, matrix, map, residual, zoom, enlarge, shrink, adjust, probability, distribution, Gaussian, block, area, region, image, picture, AI, artificial, deep, learning, intelligence, neural, network, train, video, input

| | | |
|---|---|---|
| **C.** | **DOCUMENTS CONSIDERED TO BE RELEVANT** | |

| Category* | Citation of document, with indication, where appropriate, of the relevant passages | Relevant to claim No. |
|---|---|---|
| X | WO 2023283202 A1 (BEIJING DAJIA INTERNET INFORMATION TECHNOLOGY CO., LTD.) 12 January 2023 (2023-01-12) description, paragraphs 6-197, and figures 1-20 | 1-3, 11-12, 22-25, 33-34, 44, 46-50 |
| X | WO 2023075314 A1 (SAMSUNG ELECTRONICS CO., LTD.) 04 May 2023 (2023-05-04) description, paragraphs 37-182, and figures 1-22 | 1-3, 11-12, 22-25, 33-34, 44, 46-50 |
| A | CN 110222220 A (TENCENT TECHNOLOGY (SHENZHEN) CO., LTD.) 10 September 2019 (2019-09-10) entire document | 1-50 |
| A | WO 2023279968 A1 (HUAWEI TECHNOLOGIES CO., LTD. et al.) 12 January 2023 (2023-01-12) entire document | 1-50 |
| A | WO 2023069235 A1 (TENCENT AMERICA LLC) 27 April 2023 (2023-04-27) entire document | 1-50 |

☑ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **23 April 2024** | **26 April 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/074438** |

**C.    DOCUMENTS CONSIDERED TO BE RELEVANT**

| Category* | Citation of document, with indication, where appropriate, of the relevant passages | Relevant to claim No. |
| --- | --- | --- |
| A | EP 1675405 A1 (THOMSON LICENSING) 28 June 2006 (2006-06-28)<br>entire document | 1-50 |

Form PCT/ISA/210 (second sheet) (July 2022)

## INTERNATIONAL SEARCH REPORT
### Information on patent family members

| International application No. |
| --- |
| **PCT/CN2024/074438** |

| Patent document cited in search report | | | Publication date (day/month/year) | Patent family member(s) | | | Publication date (day/month/year) |
| --- | --- | --- | --- | --- | --- | --- | --- |
| WO | 2023283202 | A1 | 12 January 2023 | KR | 20240027791 | A | 04 March 2024 |
| WO | 2023075314 | A1 | 04 May 2023 | None | | | |
| CN | 110222220 | A | 10 September 2019 | WO | 2020224405 | A1 | 12 November 2020 |
| | | | | EP | 3968180 | A1 | 16 March 2022 |
| | | | | EP | 3968180 | A4 | 06 July 2022 |
| | | | | JP | 2022517835 | A | 10 March 2022 |
| | | | | JP | 7163504 | B2 | 31 October 2022 |
| | | | | US | 2021319243 | A1 | 14 October 2021 |
| WO | 2023279968 | A1 | 12 January 2023 | None | | | |
| WO | 2023069235 | A1 | 27 April 2023 | KR | 20230108335 | A | 18 July 2023 |
| | | | | EP | 4232954 | A1 | 30 August 2023 |
| | | | | EP | 4232954 | A4 | 13 March 2024 |
| | | | | US | 2023122449 | A1 | 20 April 2023 |
| EP | 1675405 | A1 | 28 June 2006 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310852519